(19) Europäisches Patentamt
European Patent Office
Office européen des brevets

(11) **EP 2 612 119 B1**

(12) # EUROPEAN PATENT SPECIFICATION

(45) Date of publication and mention
of the grant of the patent:
**13.05.2015 Bulletin 2015/20**

(21) Application number: **11761304.2**

(22) Date of filing: **26.08.2011**

(51) Int Cl.:
*G01K 1/16* (2006.01)        *G01K 11/32* (2006.01)

(86) International application number:
**PCT/EP2011/064748**

(87) International publication number:
**WO 2012/028555 (08.03.2012 Gazette 2012/10)**

(54) **SENSING USING THERMAL ENERGY SPREADING**

MESSUNG ANHAND DER VERTEILUNG VON WÄRMEENERGIE

DÉTECTION PAR ÉTALEMENT D'ÉNERGIE THERMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.09.2010 US 379561 P**

(43) Date of publication of application:
**10.07.2013 Bulletin 2013/28**

(73) Proprietor: **AP Sensing GmbH
71034 Böblingen (DE)**

(72) Inventor: **GERWIG, Daniel
71034 Böblingen (DE)**

(74) Representative: **Dilg, Haeusler, Schindelmann
Patentanwaltsgesellschaft mbH
Leonrodstraße 58
80636 München (DE)**

(56) References cited:
**DE-A1-102007 015 231      GB-A- 2 034 111
JP-A- 2007 178 349        US-A- 6 079 875
US-A1- 2004 213 323**

## Description

The invention relates to a device for widening a spatially limited thermal energy peak region for sensing the spatially limited thermal energy peak region.

Furthermore, the invention relates to a sensor apparatus for sensing information indicative of a temperature in a spatially limited thermal energy peak region.

Beyond this, the invention relates to a method of use.

Moreover, the invention relates to a method of widening a spatially limited thermal energy peak region for sensing the spatially limited thermal energy peak region.

US 6,079,875 discloses an apparatus for measuring the temperature of an object, wherein the apparatus has a temperature sensor with at least one optical fiber and a temperature measurement system, wherein the optical fiber of the temperature sensor is supported by a support element, wherein the temperature even of smaller object can be measured easily and accurately.

A light pulse propagating along an optical fiber induces Raman backscattering. Its amplitude depends on the fiber temperature. The backscattered signal can be used to determine the temperature of the fiber. The light pulse needs more time to reach further points and to travel back to the pulse source, therefore the time-of-flight can be used to determine the temperature over location along the fiber. This is the well known principle of Distributed Temperature Sensing (DTS) based on Raman scattering.

It has been shown that smoldering fires underneath of coal conveyor belts can be detected with the DTS technology. This technology is being used successfully in German coal mines, where a sensor cable is installed below the conveyor belt in proximity to a possible temperature event, which normally generates significant heat over a significant dimension (S. Großwig, B. Vogel, C. Kümpel, C. Pohl, 2008, "Early detection of smoldering fire in close proximity of conveyer belt systems", Glückauf 144 (2008), No. 1/2).

The detection of hot running rollers with linear heat sensing cables installed in parallel and in close proximity to the rollers has turned out to be difficult due to the relatively low temperature radiation on the outside of the rollers (the heat source are the bearings and the axis of the rollers) over a relatively small dimension. Very small size temperature events (down to a centimeter) cannot be detected, by DTS primarily because the temperature sensor cable cannot be installed close enough to the heat source to detect the radiation heat. Additionally, the spatial resolution of the temperature sensor is not fine enough for such small size temperature events. DTS systems today typically provide a spatial resolution of half a meter, which does not allow to detect hotspots in the order of a few centimeters.

Point sensors using a fiber optic sensor cable can be realized by coiling the fiber around a small cylinder, which transforms a punctual temperature event to a larger length of the sensor cable. Another conventional realization are analog sensor cables with a chain of electrical point sensors. These solutions however have limitations if a large number of hot spot locations has to be monitored at the same time.

Hence, a shortcoming is the limited spatial resolution of DTS and other sensor principles. If a temperature spot is spatially confined and occurs only with a spatial extension of several centimeters, it may be invisible for a DTS sensor. Similar problems occur with other temperature sensor technologies with also have a limited spatial resolution.

It is an object of the invention to enable temperature sensing with proper spatial resolution.

In order to achieve the object defined above, a device for widening a spatially limited thermal energy peak region for sensing the spatially limited thermal energy peak region, a sensor apparatus for sensing information indicative of a temperature of a spatially limited thermal energy peak region, a method of use, and a method of widening a spatially limited thermal energy peak region for sensing the spatially limited thermal energy peak region according to the independent claims are provided.

According to the invention, a device for widening a spatially limited thermal energy peak region for sensing the spatially limited thermal energy peak region as defined in claim 1 is provided. The device comprises a thermal coupling element adapted to be thermally coupled to the spatially limited thermal energy peak region, and a widening region thermally coupled to the thermal coupling element so that thermal energy conducted from the spatially limited thermal energy peak region to the thermal coupling element is spatially widened at the widening region. The widening region comprises a sensor receptacle adapted for receiving a sensor along at least a part of an extension of the widening region in such a manner that the sensor, when being received in the sensor receptacle, is thermally coupled to (particularly is coupled for thermal conduction with) the widening region (particularly is thermally coupled to the resulting spatially widened thermal energy region).

According to another exemplary embodiment of the invention, a sensor apparatus for sensing information indicative of a temperature in a spatially limited thermal energy peak region is provided. The sensor apparatus comprises a device having the above mentioned features and a sensor received in the sensor receptacle.

According to yet another exemplary embodiment of the invention, a device having the above mentioned features or a sensor apparatus having the above mentioned features is used for widening a spatially limited thermal energy peak region from an original spatial extension to a larger widened spatial extension and for thermally coupling the widened thermal energy peak region to a sensor being limited for detecting thermal energy only with a spatial extension larger than or equal to a sensor resolution limit. The sensor resolution limit may be larger than the original spatial extension and smaller than or equal to the widened spatial extension.

According to the invention, a method of widening a spatially limited thermal energy peak region for sensing the spatially limited thermal energy peak region as defined in claim 15 is provided. The method may comprise thermally coupling a thermal coupling element to the spatially limited thermal energy peak region, thermally coupling a widening region to the thermal coupling element so that thermal energy conducted from the spatially limited thermal energy peak region to the thermal coupling element is spatially widened at the widening region, and receiving a sensor in a sensor receptacle of the widening region along at least a part of an extension of the widening region in such a manner that the sensor is thermally coupled to the widening region.

According to still another exemplary embodiment of the invention, a program element (for instance a software routine, in source code or in executable code) is provided, which, when being executed by a processor (such as a microprocessor or a CPU), is adapted to control or carry out a method having the above mentioned features.

According to yet another exemplary embodiment of the invention, a computer-readable medium (for instance a CD, a DVD, a USB stick, a floppy disk or a harddisk) is provided, in which a computer program is stored which, when being executed by a processor (such as a microprocessor or a CPU), is adapted to control or carry out a method having the above mentioned features.

Data processing which may be performed according to embodiments of the invention can be realized by a computer program, that is by software, or by using one or more special electronic optimization circuits, that is in hardware, or in hybrid form, that is by means of software components and hardware components.

The term "spatially limited thermal energy peak region" may particularly denote a spatially confined or limited region having a temperature which significantly differs from a surrounding temperature. The spatially limited thermal energy peak region may be a local heat source (having a higher temperature than the surrounding) or a local heat sink (having a lower temperature than the surrounding). The spatially limited thermal energy peak region, for instance, may be smaller than 10 cm, particularly may be smaller than 5 cm.

The term "thermal coupling element" may particularly denote a physical structure of a material and shape to have a good thermal conductivity. Thermal conductivity is the property of a material that indicates its ability to conduct thermal energy. Hence, the thermal coupling element may serve to thermally short-circuit the peak region with the widening region. For instance, materials having a thermal conductivity of at least 10 W/(m K), particularly of at least 50 W/(m K), more particularly of at least 100 W/(m K), may be used for the thermal coupling element. A dimension of the thermal coupling element may be, along at least one spatial axis, less than 1/5 (particularly less than 1/10, for instance 1/20) of a dimension of the widening region along at least one spatial axis. A dimension of the thermal coupling element may be, along at least one spatial axis, in the same order of magnitude as the spatially limited thermal energy peak region, for instance may be smaller than 10 cm, particularly may be smaller than 5 cm (for instance 2cm).

The term "widening region" may particularly denote a physical structure which has (in one or more spatial directions) a first spatial extension in a first end section and a second spatial extension in a second end section, the first end section being couplable to the sensor and the second end section being couplable to the thermal coupling element. The first spatial extension may then be larger than the second spatial extension. The widening region can be denoted as a bridge element which transfers thermal energy from a spatially confined source to a spatially extended destination, or vice versa. Thus, thermal energy is spatially spreadable from a smaller area to a larger area. For instance, materials having a thermal conductivity of at least 10 W/(m K), particularly of at least 50 W/(m K), more particularly of at least 100 W/(m K), may be used for the widening region which may also be denoted as a thermal energy spreading element.

The term "spatially widening" may particularly denote a thermal spreading, i.e. a broadening a region of a local temperature increase or decrease as compared to an ambient temperature. Spatially widening the thermal event may be equivalent to distributing spatially confined energy over a larger spatial range.

The term "sensor receptacle" may particularly denote an accommodation space configured (particularly shaped and dimensioned) for receiving a sensor (such as a sensor cable or another elongate sensor structure) so that in the accommodated state, the sensor is directly thermally coupled to the material delimiting the sensor receptacle. Preferably but not necessarily, the sensor when received in the sensor receptacle may be fully circumferentially surrounded by material constituting the widening region.

The term "thermally coupling" may particularly denote that two structures are coupled to one another so as enable transfer of thermal energy between the structures. Such a transfer may be performed primarily or exclusively by thermal conduction. However, such a transfer may also be performed, additionally or alternatively, by thermal radiation and/or thermal convection. Thermal conduction may be denoted as a thermal transfer process which transfers thermal energy between neighboring molecules in a substance due to a temperature gradient. Thermal radiation may be denoted as a thermal transfer process resulting from a propagation of electromagnetic radiation emitted from a material which is due to the heat of the material, the characteristics of which depend on its temperature. Thermal convection may be denoted as a thermal transfer process resulting from the movement of molecules within fluids (i.e. liquids, gases).

The term "original spatial extension" may particularly denote a dimension or area at the narrow point of the widening region.

The term "widened spatial extension" may particularly denote a dimension or area at the most expanded or widespread portion of the widening region.

The term "sensor resolution limit" may particularly denote a minimum spatial extension of a thermal energy source or sink which is necessary to render this thermal energy source or sink detectable for the sensor. In other words, sufficiently accurate sensing or even detection of the presence of a sensor event is not possible for the sensor (for instance due to intrinsic sensing processes) if a thermal energy source or sink has a spatial extension being smaller than the sensor resolution limit.

According to an exemplary embodiment of the invention, a sensor having an intrinsically limited spatial resolution may be made capable of detecting sensor events having a spatial extension which goes beyond this spatial resolution, thereby extending the range of detectable thermal events to smaller dimensions. For this purpose, a thermally conductive structure is provided which is thermally responsive to and subsequently widens up an initiate spatially limited thermal energy peak region to be detected so that the widened thermal energy peak region has a sufficient spatial extension to be detectable by the sensor with its intrinsic spatial resolution. This concept makes it possible to extent the flexibility of implementing sensors for basically any desired application. For instance in a scenario in which a local temperature increase or decrease occurs, even sensors with relatively rough or poor spatial resolution can be used when placing a widening adapter structure according to an embodiment of the invention between the local temperature peak on the one hand and the sensor on the other hand. According to an exemplary embodiment of the invention, a punctual temperature event may be enlarged or transferred into an elongated one-dimensional or two-dimensional thermal event.

The device may comprise a spring mechanism adapted for applying a biasing spring force between the thermal coupling element and the spatially limited thermal energy peak region to thereby promote a thermal coupling between the thermal coupling element and the spatially limited thermal energy peak region. Additionally or alternatively, the device may comprise a spring mechanism adapted for applying a biasing spring force between the sensor receptacle and the sensor to thereby promote a thermal coupling between the sensor receptacle and the sensor. Hence, by applying a default force pressing or pushing one of the components towards the respective other one, direct and continuous contact between the respective components may be promoted, thereby also improving thermal exchange between them. For instance, the spring mechanism may be a spring element such as a coil spring or a leaf spring. It is possible that the spring mechanism is made of spring steel.

In the following, further exemplary embodiments of the device will be explained. However, these embodiments also apply to the apparatus and to the methods.

In an embodiment, a part of the thermal coupling element which is not directly thermally coupled to the widening region and/or a part of the widening region which is not directly thermally coupled to the sensor may be covered with a thermal isolation. Particularly portions of the thermal coupling element and/or of the widening region exposed to an environment may be covered by a thermal isolation layer or member such as a coating or a casing of a poorly thermally conducting material. By taking this measure, thermal energy losses towards the environment may be reduced so that the sensitivity for detecting thermal energy events can be further improved. Hence, it is possible to prevent the loss of heat in the heat spreader by using a thermal insulation around the heat spreader.

In an embodiment, the thermal coupling element may be a solid block. Thus, the thermal coupling element may be a bulk body which has the capability of properly transferring the thermal energy from the peak region to the widening region. For example, such a block may be a cube or a cylinder, a surface portion of which being directly coupled, for instance being in direct contact with, a member causing the thermal energy peak.

In an embodiment, the widening region may have a narrow end portion and a wider end portion, the narrow end portion being connected to the thermal coupling element and the wider end portion including the sensor receptacle. Thus, the widening region may allow a spreading or distribution of thermal energy supplied via the narrow end and being conducted to the wider end. Since the wider end portion is in contact with or at least closely thermally coupled with the sensor, a local thermal energy peak may be transferred into a spatially increased zone of thermal energy, thereby rendering the thermal energy event detectable even by a sensor with a limited sensor capability.

In an embodiment, the sensor receptacle may have a shape of a tubular body, of a hook or of a U-shaped profile. When the sensor receptacle is a tube or a tubular, the sensor may be guided through a lumen of the tube so as to be, basically along its entire circumference, in direct or basically direct thermal contact with the sensor receptacle and hence with the widening region, thereby ensuring a homogeneous thermal transfer around the entire perimeter of the sensor. If the sensor receptacle is a hook, the sensor may be mounted with low effort by placing it within this hook. The sensor can also be taken out of the hook with low effort, for instance for maintenance or disassembly purposes. The hook may be formed by correspondingly bending a plate (such as a metal plate) with a proper thermal conductivity so that the hook can form a hollow cylindrical segment along which an elongated sensor cable may be placed. Also in a scenario in which the sensor receptacle is formed as a basically U-shaped profile, it can be realized by bending a plate (such as a metal plate) so that the sensor cable may be placed in a potential minimum of the U-shaped profile.

In an embodiment, the thermal coupling element may comprise an angle piece (or an elbow) having two angled legs each of which being to be coupled to a member (such as an axis of a roller of a conveyor belt) representing a respective spatially limited thermal energy peak region. The widening region may comprise a tubular body arranged at a summit (or a crest) of the angle piece and may have a lumen forming the sensor receptacle. The summit may laterally extend beyond the angle piece constituting the thermal coupling element. By embodying the thermal coupling element as an angle piece, it is possible to couple two thermal energy peak regions or corresponding members to the respective plate regions of the angle piece. For instance, two rollers of a conveyor belt may be placed with shafts or axis of the rollers adjacent to, contacted with or guided through the plate-like legs. The summit or apex of the intersection between the two legs may then form an axis along which a sensor cable may be aligned.

In another embodiment, the thermal coupling element may comprise a wedge-shaped block (which may have a triangular cross section) having opposing slanted surfaces to be coupled to one or two members (such as an axis of a roller of a conveyor belt) representing a respective spatially limited thermal energy peak region. At least a part of the widening region may be part of the wedge-shaped block (for instance a portion thereof close to an edge of the block) having a lumen forming the sensor receptacle. A wedge-shaped block of a solid material may ensure a proper thermal conductivity. Lateral planar surface portions of the wedge-shaped block may then allow two members which may form a spatially limited thermal energy peak region to be brought in close thermal contact to the thermal coupling element. Furthermore, when an edge portion of the wedge-shaped block is provided with a through-hole, the sensor cable (with or without a surrounding tube for promoting thermal coupling) may be guided through this through-hole to enable a proper thermal energy transfer with the sensor cable.

In still another embodiment, the thermal coupling element may comprise a plate-shaped piece having an eyelet (forming a through hole through the piece). Opposing external surfaces of the plate-shaped piece enclosing the eyelet may each to be coupled to a member representing a respective spatially limited thermal energy peak region. The widening region may comprise a tubular body extending through the eyelet (optionally contacting the eyelet) and having a lumen forming the sensor receptacle. Such an eyelet configuration may guarantee that the sensor cable can be guided through the system in a convenient way and with a proper thermal conductivity to the spatially limited thermal energy peak regions. Two members which may form such a spatial limited thermal energy peak region may then be attached to the lateral external surfaces of the eyelet.

In an embodiment, the device may further comprise a support structure, particularly a pair of spaced bows, adapted for supporting the thermal coupling element and/or the widening region. Two such spaced bows may form a mechanically stable support structure having a gap in between, wherein the gap may serve for accommodating the thermal coupling element and/or the widening region at least partially. Such bows may further be made of a thermally poorly conductive material to prevent thermal losses by heat conduction from the thermal coupling element and/or the widening region to the bows and from there to a ground or carrier structure.

In an embodiment, the thermal coupling element and the widening region may be integrally formed. Additionally or alternatively, the thermal coupling element and the widening region may be formed of a single material. By forming the thermal coupling element and the widening region as a single piece, any thermal energy transfer losses between different bodies may be prevented. By forming them of a single material, undesired thermal energy loss effects at a border between different materials may also be prevented. Aluminum is an appropriate material for the thermal coupling element and/or the widening region, since it has a high thermal conductivity, a low weight and is relatively cheap. Alternatively, other materials such as brass or spring steel may be used. Also a combination of these and/or other materials is possible. For instance, an aluminum piece for proper thermal conduction may be welded to spring steel to provide mechanical robustness for applications under harsh conditions and to provide a biasing spring force for improving thermal coupling.

In particular, the plate-shaped piece may be made of aluminum using an extrusion process. In particular, the plate-shaped piece may have a shape having a cylindrical shape, wherein the shape may be described having a volume formed by translating a plane surface along a longitudinal direction. The plane surface which is displaced along the longitudinal direction to define the volume or shape of the plate-shaped piece may for example have a trapezoid shape, in particular having rounded corners. The opposite edges being inclined relative to each other (in particular being not parallel to each other) may extend along directions including an angle between 25° and 45°.

In particular, the edges or borders of the plane surface (which plane surface may represent a cross-section of the plate-shaped piece) may, when translated or displaced along the longitudinal direction define (at least a portion of) the coupling surfaces of the wedge-shaped block, wherein the coupling surfaces are couplable to one or two members representing a respective spatially limited thermal energy peak region. Thus, also the coupling surfaces may lie in two non-parallel planes including an angle between 25° and 45°, in particular between 30° and 40°.

Thereby, in particular, the opposite coupling surfaces of the wedge-shaped block may be coupled to two axes of two rollers of a conveyor belt, wherein the axes may have plane end faces, which may contact the two opposing coupling surfaces for transferring heat to the thermal coupling element comprising the wedge-shaped block having the opposite coupling surfaces.

In particular, the wedge-shaped block may have a trapezoid cross-sectional shape, wherein the coupling surfaces are formed at the opposing surfaces of the wedge-shaped block which lie in two planes including an angle between 25° and 45°.

The wedge-shaped block or the plate-shaped piece may have a recess (in particular remote or spaced apart from the coupling surfaces) to receive at least a portion of the widening region, wherein the recess in particular has a cylindrical shape such that the recess is formed by omitting material in the thermal coupling element in a spatial region defined or definable by translating a plane surface delimited by borders along the longitudinal direction, wherein the plane surface may have a shape substantially corresponding to a cross-sectional shape of the widening region, at least corresponding to a cross-sectional shape of the widening region in a portion thereof. In particular, the recess may have a shape complementary to a shape of the widening region at a portion thereof.

According to an embodiment of the present invention, a thermal energy spreading apparatus is provided, which comprises a device for widening a spatially limited thermal energy peak region as described according to embodiments above and a mounting arrangement adapted to releasably (such that the device can be mounted and also demounted) mount (in particular comprising supporting, fixing, attaching) the device at a holder (which in particular is also adapted to support a structure or element or arrangement representing the spatially limited thermal energy peak region, such as an axis of a roller of a conveyor belt) for positioning (in particular comprising arranging and/or orienting) the device such that the spatially limited thermal energy peak region is at least partially in physical contact (in particular in direct physical contact, such that the thermal coupling element or at least a portion thereof abuts the spatially limited thermal energy peak region, for example represented by a physical structure) with the thermal coupling element.

By providing the mounting arrangement a good coupling of the thermal coupling element to the spatially limited thermal energy peak region represented by a physical structure (also denoted in the following as "heat probing structure") may be achieved. In particular, the holder may also support or hold the heat probing structure, at least at a portion thereof.

In particular, the holder may be a conventional holder for supporting or holding the heat probing structure and the mounting arrangement may be constructed to allow mounting the device for widening a spatially limited thermal energy peak region to the holder. Thereby, the device for widening a spatially limited thermal energy peak region (in the following also denoted as "heat widening device") may be brought in a correct position and/or orientation such that the thermal coupling element, in particular the coupling surfaces thereof, are in thermal contact with at least a portion of the heat probing structure supported also by the holder at which the heat widening device is mounted using the mounting arrangement.

In particular, the mounting arrangement may be specially configured to allow mounting of the heat widening device to the holder, in particular depending on a construction, geometry or design of the holder. Thereby, the heat widening device may be mounted to a variety of types of holders.

The mounting arrangement may comprise a spring mechanism which is adapted to apply a biasing spring force between the thermal coupling element and the heat probing structure (in particular representing the spatially limited thermal energy peak region) and/or between the widening region and the heat probing structure and/or between the sensor receptacle and the sensor to thereby promote a thermal coupling between the thermal coupling element and the heat probing structure. In particular, the spring mechanism may comprise one, 2, 3, 4 or even more spring elements.

According to an embodiment of the present invention, the spring mechanism comprises a spring (in particular comprising a wound hardened steel providing elasticity to store mechanical energy and exert a force when in a non-equilibrium state, i.e. either compressed or expanded beyond an equilibrium state) and a bolt (or a bar or a pin) having a locking element arranged at a first end of the bolt (in particular at a longitudinal end of the bolt), wherein the bolt is adapted to penetrate through a through-opening which is formed in the thermal coupling element and/or in the widening region, wherein the locking element is releasably lockable at the holder at a first holder portion and wherein a second end of the bolt (a second longitudinal end of the bolt) is adapted to hold the spring in a biased state (in particular in a compressed state relative to the equilibrium state) between the second end of the bolt and a surface of the thermal coupling element (in particular the wedge-shaped block) and/or the widening region surrounding the through-opening for applying the biasing spring force (for thermally coupling the thermal coupling element to the heat probing structure).

In particular, the heat widening device may be mounted at the holder by engaging or coupling the locking element of the bolt with a portion of the holder, in particular comprising guiding the first end of the bolt harboring the locking element through a slit in the holder and turning the locking element at the first end of the bolt around a longitudinal axis of the bolt, in particular by 90°. In particular, then the locking element is prohibited from sliding through the slit of the holder, but instead is releasably locked at the holder. Thereby, the spring may adapt a compressed state applying a holding force towards or to the thermal coupling element and/or the widening region for pressing or forcing the thermal coupling element (in particular via the widening region) towards or against the heat probing structure, to achieve a thermal (in particular physical direct) contact between the thermal coupling element and the heat probing structure.

The afore-described embodiment of the mounting arrangement may further comprise a clamp mechanism (for providing a fixing means using a friction force), in particular comprising two clamping members (for example provided by two metal sheet pieces and screws), for clamping the heat widening device to the holder at a second holder portion different from the first holder portion for reducing tilting the heat widening device relative to the holder.

In particular, the clamp mechanism may assist to orient the heat widening device such that the coupling element of the heat widening device is in thermal contact with the heat probing structure, wherein the clamp mechanism in particular ensures a correct orientation of the heat widening device relative to the heat probing structure.

According to another embodiment of the mounting arrangement comprised in the thermal energy spreading apparatus the spring mechanism comprises a first spring, a second spring (which is in particular formed as the first spring), a holder contacting member (which is in particular be made of a (punched or laser-cut) metal sheet which is bent appropriately) to be in contact with and supported by the holder (but which do not need to be directly mounted at the holder), a first engaging member (allowing to engage or couple the thermal coupling element and/or the widening region) for releasably (such that the first engaging member may be removed from the thermal coupling element and/or the widening region or may be engaging the thermal coupling element and/or the widening region) engaging (in particular comprising coupling or holding) the thermal coupling element and/or the widening region at a first portion, and a second engaging member (which may in particular be configured as the first engaging member or may be configured as a mirror image of the first engaging member) also for releasably engaging the thermal coupling element and/or the widening region at a second portion (different from the first portion), wherein the first spring applies the biasing spring force between the first engaging member and a first portion of the holder contacting member (at which the spring or a longitudinal end of the first spring is attached), wherein the second spring applies the biasing force between the second engaging member (at which a first longitudinal end of the second spring is attached) and a second portion of the holder contacting member (in particular at which a second longitudinal end of the second spring is attached).

In particular, the first spring and the second spring may be in an extended state (relative to the equilibrium state) when the thermal coupling element is engaged by the first engaging member and the second engaging member and the first spring is attached at the first portion of the holder contacting member as well as at the first engaging member and when the second spring is attached to the second portion of the holding contacting member as well as to the second engaging member.

In particular, providing the spring mechanism with two springs and two engaging members may securely releasably mount the heat widening device at the holder for ensuring an effective thermal coupling between the thermal coupling element and the heat probing structure. Thereby, heat of the heat probing structure may effectively conducted to the heat coupling element which may in turn transfer or conduct the received heat to the widening region. Thereby, an effective heat transfer may be provided, in particular for more accurately measuring the temperature, heat energy of the heat probing structure. Further, tilting of the heat widening device relative to the holder and relative to the heat probing structure or heat probing structures may be reduced or even avoided.

Further removal of the heat spreading device from the holder may be simplified.

According to the aforementioned embodiment of the thermal energy spreading apparatus the first engaging member may be adapted to engage the widening region at a first portion and the second engaging member may be adapted to engage the widening region at the second portion (thus, not the thermal coupling element is engaged by the first engaging member and the second engaging member directly, but the thermal coupling element may only indirectly be held via the widening region), wherein the widening region transfers the biasing force, applied by the spring mechanism, to the thermal coupling element.

In particular, holding the widening region at the first portion and the second portion spaced apart from the first portion may more effectively secure or fix the heat widening device to the holder, since the widening region may have a larger spatial extension than the thermal coupling element such that the first portion of the widening portion and the second portion of the widening region may be spaced apart farther than a maximal extent of the thermal coupling element. By holding the widening region at two portions spaced apart far from each other the correct orientation of the heat widening device relative to the holder and relative to the heat probing structure may be ensured.

According to an embodiment of the present invention, the mounting arrangement is adapted to releasably mount the heat widening device at a particular holder which comprises two straight portions (in particular made of a metal strip or band) and a bent portion connecting these two straight portions, wherein the two straight portions of the holder include an angle between 25° and 45°, wherein the two straight portions and/or the bent portion have a slit formed therethrough through which the spatially limited thermal energy peak region (or a portion of the heat probing structure) is guidable. In particular, the holder may be a conventional holder to support two axes of two rollers of a conveyor belt. Thereby, end faces of the axes may protrude through the slit of the holder. In particular, the holder may have a V-shape in cross-section. Thereby, the heat widening device may be releasably mounted at a conventional roller holder.

According to an embodiment of the present invention, the thermal coupling element comprises a planar thermal coupling surface which is arranged to contact a planar exposed surface of an external member (in particular the heat probing structure), wherein the planar exposed surface comprises the limited thermal energy peak region, wherein in particular the external member comprises an axis of a roller of a conveyor belt system.

The axis of the roller may comprise at an end of the axis lateral cutting-outs or recesses such that the end face has a cross-sectional shape defined by two parallel stretches which are joined by two circular sections. The two parallel stretches or lines may be spaced apart from each other such that the end portion of the axis may be received within the slit of the holder. Thereby, the planar exposed surface of the end face of the axes of the roller may not flush with the straight portion of the holder but may protrude beyond the surface of the straight portion which may be parallel to the planar exposed surface of the end face of the axes of the roller.

According to an embodiment of the present invention, the thermal coupling element comprises another planar thermal coupling surface which is arranged to contact another planar exposed surface of another external member (in particular another heat probing structure), the other planar exposed surface comprising another limited thermal energy peak region, wherein in particular the other external member comprises another axis of another roller of the conveyor belt system, wherein the planar thermal coupling surface and the other planar thermal coupling surface are in particular opposite to each other including an angle between 25° and 45°, in particular between 30° and 40°.

In particular, the thermal coupling element may comprise the wedge-shaped structure which may have substantially a trapezoid shape in cross-section and in particular having a cylindrical shape. Thereby, the thermal energy spreading apparatus may be adapted to widen thermal energy distributions of two different heat probing structures, in particular two different axes of two different rollers of a conveyor belt system.

According to an embodiment of the present invention, the thermal coupling element and/or the widening region have a cylindrical shape (wherein the base area or cross-section in particular comprises a trapezoid shape having rounded corners) formed by translating a base area along a longitudinal direction (along which the trapezoid having the rounded edges or corners may be translated, in order to describe or define the shape of the thermal coupling element and/or the widening region), wherein the receptacle comprises a straight through-hole (which may also be formed by for example the extrusion process, wherein the through-hole in particular has a circular shape) along the longitudinal direction.

Thereby, in particular, the thermal coupling element and/or the widening region may comprise aluminum, an aluminum alloy or any other good thermal conducting material, such as copper or a copper alloy) and are in particular manufactured using an extrusion process (in particular a process used to create objects of a fixed cross-sectional profile, wherein the material is pushed or drawn through a die of the desired cross-section, wherein in this extrusion process the material may encounter compressive and shear stresses). Thereby, manufacturing the heat spreading apparatus may be simplified and the manufacturing cost may be reduced. In particular, both the thermal coupling element and the widening region may be manufactured using a respective extrusion process requiring only two dies of the two desired cross-sectional shapes.

In particular, in the straight through-hole an optical fiber may be arranged in a straight manner.

In the following, further exemplary embodiments of the apparatus will be explained. However, these embodiments also apply to the device and to the methods.

In an embodiment, the sensor may be a linear temperature sensor, particularly an optical linear temperature sensor. The term "linear temperature sensor" may particularly denote an elongate structure which extends along a line, for instance a straight or basically straight line and is capable of measuring the temperature in a spatially dependent manner along the straight line. For instance, such a linear temperature measurement may be performed by an optical sensor, since the propagation properties of electromagnetic radiation through a linear temperature sensor waveguide accurately depends on the temperature, so that the pattern of electromagnetic radiation is a fingerprint of the temperature distribution along the linear temperature sensor. In an embodiment, the detection of "hot spot" temperature events is possible being orders of magnitudes smaller than the spatial resolution of a Linear Heat Detector. In an embodiment, it is possible to use a Linear Heat Detector (LHD) to determine and localize small temperature events with the help of a thermally insulated heat spreader. A transformation of a punctual heat source into a certain length of a LHD temperature sensor with help of a heat spreader is therefore possible.

In an embodiment, the sensor may be adapted for Distributed Temperature Sensing (DTS). In the context of this application, the term "Distributed Temperature Sensing" may particularly denote a mechanism of determining a temperature distribution along an extension of an optical fiber. For that purpose, pulses of electromagnetic radiation such as light or infrared radiation may be injected into the fiber for interaction with the fiber. In dependence of the local temperature at the specific portions of a fiber, the radiation-matter interaction properties and the phonon generation/annihilation properties of this portion of the fiber will be modified characteristically, and a pattern of scattered electromagnetic radiation may be detected at a detector in a manner which is characteristic for the temperature distribution. Thus, by analyzing the scattered electromagnetic radiation, it is possible to derive information indicative of the temperature distribution along the waveguide. The thermal energy widening concept according to an exemplary embodiment can be highly advantageously be applied to DTS, since DTS is a powerful method of temperature measurements along an elongated fiber cable. However, conventional DTS may lack sufficient spatial accuracy to detect spatially highly limited thermal energy peaks, for instance of a dimension of only a few centimeters. Therefore, by aligning one or more of the devices along a fiber of a DTS sensor system, particularly at positions where thermal energy peak events are particularly likely or are expected (for instance positions of rollers in a conveyor belt system), it is possible to improve the spatial accuracy of DTS significantly.

In an embodiment, the sensor apparatus may comprise a fiber, wherein a part of the fiber is received in the sensor receptacle. The term "fiber" may particularly denote any member capable of guiding electromagnetic radiation to propagate along a defined path. A fiber made for instance of fused silica glass may be capable for transporting visible and infrared radiation. Hence, a fiber may be a dielectric waveguide at least partially transparent for electromagnetic radiation. Such a dielectric waveguide may be surrounded by a metallic material.

In an embodiment, the fiber may be aligned along a longitudinal or basically longitudinal direction. The fiber may particularly be uncoiled. Hence, the fiber may be aligned basically straight (wherein some bendings are possible), however without forming a coil with a plurality of windings.

In an embodiment, the sensor apparatus may further comprise an electromagnetic radiation source (such as a laser) adapted for injecting primary electromagnetic radiation into the fiber, an electromagnetic radiation detector (such as a photodiode) adapted for detecting secondary electromagnetic radiation from the fiber in response to the injected primary electromagnetic radiation, and a processor adapted for processing the secondary electromagnetic radiation to thereby derive information indicative of a temperature characteristic along the fiber, particularly at a position of the device. The term "electromagnetic radiation" may particularly denote photons of a suitable wavelength capable of propagating through a fiber. Optical radiation may be in a range between 400 nm and 800 nm. Infrared radiation used for DTS may be in a range between 800 nm and 5000 nm.

The sensor apparatus may further comprise a processor adapted for calculating a temperature in the spatially limited thermal energy peak region based on signals sensed by the sensor and based on predefined data indicative of the thermal conduction properties of the device. In a DTS scenario, the sensor signals may allow for a calculation of the temperature (or even a temperature distribution) in the widened region. Knowing thermal conduction properties of the device such as materials, geometry, dimensions, etc. of the device it is possible to calculate back the temperature in the peak region. Alternatively, this may be done based on empiric measurement data characterizing the thermal conduction characteristic of the device. Knowing the position of the thermal coupling element, the position of the sensor event may be localized precisely.

In an embodiment, the sensor apparatus may comprise a plurality of devices each having the above mentioned features, wherein the devices are arranged or aligned at different spatial sections along an extension of the sensor. By arranging a plurality of the above-mentioned devices along an elongated sensor cable, a reliable information with regard to thermal energy spots along the sensor cable may be obtained with a spatial resolution basically corresponding to an extension of the widening region. In contrast to conventional approaches, such a system is also capable of detecting sensor events with a thermal energy peak in the order of magnitude of centimeters or even less.

The sensor apparatus may further comprise at least one further device having the above-mentioned features, and at least one further sensor received in the sensor receptacle of the at least one further device. The sensor apparatus may further comprise a processor adapted for localizing at least one spatially limited thermal energy peak region by evaluating in combination signals sensed by the sensors. More precisely, the processor may be configured for determining at which device or at which devices a thermal event occurs for sure or with the highest probability. In order to derive even more reliable positioning information regarding a thermal event, the processor may evaluate signals from various sensors (such as parallel aligned DTS sensor cables) in combination. The processor may be implemented by hardware, by software, or in hybrid form, i.e. by a combination of hardware and software.

In the following, further exemplary embodiments of the methods will be explained. However, these embodiments also apply to the device and to the apparatus.

In an embodiment, the original spatial extension may be in a range between 1 mm and 20 cm (for instance in a range between about 1 mm and about 20 cm), particularly in a range between 1 cm and 5 cm (for instance in a range between about 1 cm and about 5 cm). Such original spatial extensions go beyond the spatial resolution of conventional DTS systems.

In an embodiment, the widened spatial extension may be in a range between 30 cm and 3 m (for instance in a range between about 30 cm and about 3 m), particularly in a range between 50 cm and 1 m (for instance in a range between about 50 cm and about 1 m). Since such spatial extensions are detectable with DTS systems, the widening or spreading of a thermal energy event to such dimensions makes even such sensor events accessible to DTS.

In an embodiment, the method may be executed for detecting a local temperature increase as the spatially limited thermal energy peak region along a conveyor belt, particularly at rollers arranged along a conveyor belt, more particularly along rollers arranged along a coal conveyor belt. Such a conveyor belt may comprise a flexible belt made of a textile, a fabric or rubber which is driven by one or more motors driving the rollers as well. However, particularly when operating the conveyor belt at a high transport speed, it can happen under undesired circumstances that one or more of the rollers run hot and are in the danger of being overheated. This may be dangerous, since a smoldering fire may develop in such an event. Furthermore, this event can cause significant expenditure for repairing a conveyor belt. With a conventional DTS system, such very local heat events are not properly detectable, because a shaft or an axis of a roller has a dimension in the order of magnitude of a few centimeters. However, by spreading the heat generated at such an overheated roller over the entire widening region of the device being thermally coupled with a sensor cable, it

# EP 2 612 119 B1

is possible to detect even such events with high accuracy with a DTS system. A hot running roller may have a temperature of 80°C to 150°C. Hence, in an embodiment, a direct temperature coupling to the axes of hot running coal conveyer belt rollers is possible. Hence, the detection of hot running rollers in coal conveyer belts through direct thermal coupling of a LHD to the axes of two adjacent rollers and spreading the punctual heat to a sufficient length of the temperature sensor to be within the spatial resolution of the LHD is made possible.

In an embodiment, the spatially limited thermal energy peak region may be a local heat source. Hence, the spatially limited thermal energy peak region may be a region having a temperature which is significantly higher than a temperature in the surrounding. Significantly higher may mean that the temperature is more than 10°C, particularly more than 20°C, more particularly more than 50°C, higher than the ambient temperature. An exemplary scenario where this may happen is a roller of a conveyor belt which may run hot.

In another embodiment, the spatially limited thermal energy peak region may be a local heat sink. Hence, other embodiments of the invention may also be implemented with local heat sinks, i.e. positions at which the temperature is locally significantly lower than the ambient temperature. Significantly lower may mean that the temperature is more than 10°C, particularly more than 20°C, more particularly more than 50°C, below the ambient temperature. An example for this is a supply line for supplying a coolant such as liquid nitrogen, wherein leaks along such a supply line may be detected with an apparatus according to an embodiment of the invention. Also in such supply lines, there are suspicious positions at which leaks can be expected with a high probability, for instance welding connections between adjacent tubes.

The aspects defined above and further aspects of the invention are apparent from the examples of embodiment to be described hereinafter and are explained with reference to these examples of embodiment.

The invention will be described in more detail hereinafter with reference to examples of embodiment but to which the invention is not limited.

Fig. 1 illustrates a distributed temperature sensing apparatus for sensing temperature information at a number of spatially limited thermal energy peak regions according to an exemplary embodiment of the invention implemented as a coal conveyor belt arrangement.
Fig. 2 illustrates a cross-sectional view of a distributed temperature sensing fiber cable.
Fig. 3 illustrates a cross-sectional view of a fiber cable guided through a tubular widening region according to an exemplary embodiment of the invention.
Fig. 4 illustrates a front view of a device for widening a spatially limited thermal energy peak region according to an exemplary embodiment of the invention.
Fig. 5 shows a top view of the device of Fig. 4.
Fig. 6 shows a cross-sectional view of a device for widening a spatially limited thermal energy peak region according to an exemplary embodiment of the invention.
Fig. 7 shows a cross-sectional view of another device for widening a spatially limited thermal energy peak region according to an exemplary embodiment of the invention.
Fig. 8 shows an apparatus for widening a spatially limited thermal energy peak region for temperature coupling and transformation according to still another exemplary embodiment of the invention.
Fig. 9 shows a cross-sectional view of a device for widening a spatially limited thermal energy peak region according to an exemplary embodiment of the invention, wherein a temperature coupling to a conveyor belt roller is intended.
Fig. 10 and Fig. 11 show two different embodiments of a sensor apparatus for sensing information indicative of a temperature of a spatially limited thermal energy peak region according to exemplary embodiments of the invention.
Fig. 12 shows an angle piece implemented in the sensor apparatus of Fig. 11.
Fig. 13 shows an arrangement for sensing information indicative of a temperature of a spatially limited thermal energy peak region according to an exemplary embodiment of the invention.
Fig. 14 shows a sensor apparatus for localizing one or more spatially limited thermal energy peak regions by evaluating in combination signals sensed by various sensors according to an exemplary embodiment of the invention.
Fig. 15 illustrates a perspective view of a thermal energy spreading apparatus according to an embodiment of the present invention, wherein the apparatus is mounted at a holder for holding two axes of two rollers of a conveyor belt.
Fig. 16 illustrates another perspective view of the thermal energy spreading apparatus illustrated in Fig. 15.
Fig. 17 illustrates a perspective view of another thermal energy spreading apparatus according to an embodiment of the present invention, wherein the apparatus is releasably mounted at a holder for holding two axes of two rollers of a conveyor belt.
Fig. 18 illustrates another perspective view of the thermal energy spreading apparatus illustrated in Fig. 17, wherein two rollers of the conveyor belt are also illustrated which are supported by the holder at which the thermal energy spreading apparatus is releasably mounted.
Fig. 19 illustrates another perspective view of the thermal energy spreading apparatus illustrated in Figs. 17 and 18.

The illustration in the drawing is in schematic form. In different drawings, similar or identical elements are

10

provided with the same reference signs.

An embodiment of the invention relates to hot spot detection using an optical linear heat detector with limited spatial resolution. Such an embodiment relates to determining the temperature and location of a hot spot using a linear heat detector (LHD) or distributed temperature sensor (DTS) with limited spatial resolution by a heat spreader, which is directly temperature coupled to the punctual temperature event and which is able to distribute the heat to a detectable length of the sensor cable. One application example is the detection of punctual temperature events in hot running rollers on coal conveyor belts. Laboratory and on site tests have been performed to proof the functionality and reliability of embodiments of the invention. A reliable method of directly coupling to the temperature of a small size heat source is provided, using an thermally insulated heat spreader to transform a punctual temperature event to a certain length of the linear heat detector sensor cable, which is within the spatial resolution. With such an embodiment, small temperature events can be detected, which are orders of magnitude smaller than the spatial resolution of the intrinsic linear heat detector.

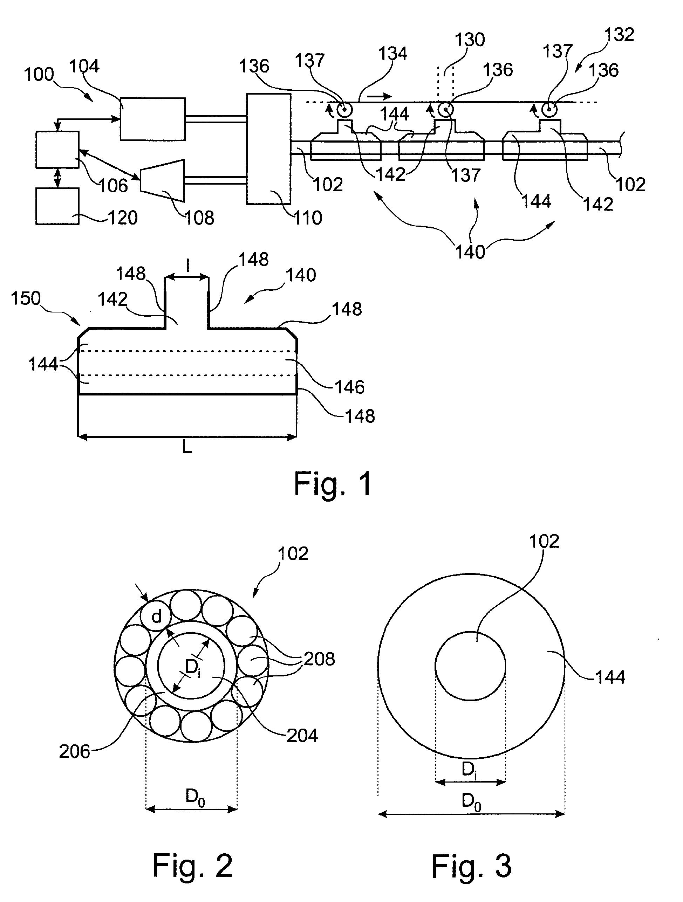

In the following, referring to **Fig. 1,** a distributed temperature sensing (DTS) apparatus 100 for measuring a temperature distribution along a waveguide 102 according to an exemplary embodiment will be explained.

The distributed temperature sensing apparatus 100 comprises an electromagnetic radiation source 104 for generating electromagnetic radiation to be coupled into the waveguide 102. Beyond this, a processor 106 (such as a microprocessor or a CPU, central processing unit) is provided which is adapted for deriving information indicative of a temperature distribution along the waveguide 102 based on an evaluation of electromagnetic radiation emitted by the electromagnetic radiation source 104, reflected at a certain portion of the waveguide 102 after propagation through the waveguide 102 and having traveled back to a detector 108. In the present embodiment, the waveguide 102 is an optical fiber made of silica glass.

In the embodiment of Fig. 1, the electromagnetic radiation generator 104 is a pulsed laser source to generate electromagnetic radiation of a certain wavelength. The laser 104 is configured such that it directs or couples electromagnetic radiation having one wavelength into the optical fiber 102.

The electromagnetic radiation source 104 emits pulses of the infrared radiation and couples a corresponding beam via an optical coupler 110 into the waveguide 102. The electromagnetic radiation propagates along the waveguide 102 and is, for instance due to inconsistencies of the material of the waveguide 102, partially reflected along the waveguide 102. The wave-matter (electromagnetic radiation, material of the waveguide 102) interaction properties, such as inelastic scattering of the photons at the lattice of the waveguide 102, is temperature dependent and results in a temperature-dependency of the intensities of a Stokes line and an anti-Stokes line, respectively, which are shifted to lower/higher frequencies with respect to a Rayleigh line (resulting from elastic scattering) due to phonon excitation/annihilation.

The reflected electromagnetic radiation travels back opposite to its initial propagation direction, again passes the optical coupler 110 and is detected by the detection unit 108 such as a photodiode.

The processor 106 is coupled for a unidirectional or bidirectional data communication with the detection unit 108, is coupled for a unidirectional or a bidirectional data communication with the electromagnetic radiation source 104, and is coupled for a unidirectional or a bidirectional data communication with an input/output unit 120. Via the input/output unit 120, which may be a graphical user interface (GUI), a user may communicate with the apparatus 100. For instance, the input/output unit 120 may comprise input elements such as keypads, buttons, a joystick, etc., and may comprise an output unit such as a display device, for instance an LCD device or a plasma display device.

The electromagnetic radiation source 104 emits a sequence of pulses of a certain wavelength. The detection unit 108 accumulates or integrates the detection signals over a time of, for instance, some seconds, thereby integrating over several pulses. Based on the ratio of the areas of the Stokes line and the anti-Stokes line each of which can be detected, the processor 106 may derive information indicative of a temperature distribution along the waveguide 102.

Fig. 1 also serves as a system for widening a spatially limited thermal energy peak region denoted with reference numeral 130 for sensing its presence and optionally also its temperature. More precisely, the embodiment of Fig. 1 show a conveyor belt device 132 for conveying goods such as coal and having a movable belt 134 running along a number of rollers 136. In the present scenario, the roller 136 shown in a central position of Fig. 1 is overheated (see reference numeral 130). Hence, this roller 136 is in the danger of generating a smoldering fire due to the overheating. Since an axis or a bearing 137 of the rollers 136 has a diameter of only a few centimeters, a conventional DTS system would not have a sufficient spatial accuracy for detecting this local temperature increase. Although three rollers 136 and three devices 140 are shown in Fig. 1, any other larger or smaller number of rollers 136 and/or devices 140 may be used.

However, in case of the distributed temperature sensing apparatus 100, provisions are made to render such a detection possible. For this purpose, three devices 140 are arranged spaced along an extension of the fiber 102. Each of the devices 140 is adapted for widening a corresponding spatially limited thermal energy peak region assigned to a respective roller 136 for sensing a corresponding local temperature increase (or decrease) at this position. Each device 140 comprises a narrow thermal coupling section 142 which is a solid cylindrical block which can be contacted for instance to a shaft or axis of the respective roller 136 for thermally coupling to the respective roller 136. This thermal coupling section 142 of aluminum or other material is integrally formed with a widening region 144 which may be also formed of aluminum or other material in such a manner that thermal energy conducted from the roller 136 to the thermal coupling section 142 is also thermally conducted towards the widening region to be spatially widened at this widening region 144.

As can be taken from an enlarged view of the device 140 denoted with reference numeral 150, a lateral diameter, I, of the thermal coupling section 142 is smaller (particularly a factor of three to twenty-five smaller) than a lateral diameter, L, of the widening region 144. Therefore, heat from the roller 136 is conducted to the thermal coupling section 142 and is distributed over the entire diameter, L, of the widening region 144. As can be best taken from the enlarged view 150 of the device 140 in Fig. 1, the widening region 144 has a central through-hole shaped as a cylindrical lumen and serving as a sensor receptacle 146 for receiving the fiber 102 therein with small clearance but a proper thermal contact so as to ensure a good thermal coupling between the widening region 144 and the fiber 102 received in the sensor receptacle 146. As can be further taken from the enlarged view 150 of the device 140 in Fig. 1, a portion of the surface of the device 140 is covered with a thermally isolating coating 148 which, in the shown embodiment, covers the entire surface of the device 140 with the exception of the upper planar surface of the thermal coupling section 142 being in direct thermal contact with the respective roller 136 and the inner surface of the tubular lumen forming the sensor receptacle 146. Thus, thermal losses can be minimized by the thermally isolating coating 148.

When thermal energy is conducted from the spatially limited thermal energy peak region 130 to the thermal coupling section 142 and further to the widening region 144, the fiber 102 received in the sensor receptacle 146 is heated as well. The fiber 102 is hence heated over a sufficiently long section thereof so that the heating can detected by the DTS system 100. More specifically, the processor 106 will determine the temperature and location of the section of the fiber 102 corresponding to the length of the sensor receptacle 146, by applying conventional signal processing by processor 106.

If a more refined temperature information is desired, the processor 106 may further calculate the temperature at the spatially limited thermal energy peak region 130. Apart from the electromagnetic radiation sensed by the detector 108, predefined data indicative of the thermal conduction properties of the device 140 can be used. Knowing thermal conduction properties of the device 140 and optionally further parameters such as the ambient temperature, it is possible to calculate back the temperature in the peak region 130 as well.

**Fig. 2** shows across-section of the fiber 102.

The actual waveguide, i.e. a silica glass core, is denoted with reference numeral 204. This core 204 (diameter Di) is surrounded by a stainless steel tube 206 (diameter Do) which in turn is surrounded by a plurality of stainless steel wires 208 (diameter d) which may be helically wound around the stainless steel tube 106.

**Fig. 3** shows how the fiber 102 is surrounded by the basically tubular widening region 144.

The models shown in Fig. 2 and Fig. 3 will now form the basis for a quantitative calculation, as described in the following.

The thermal conductance per meter of the aluminum widening region or heat spreader 144 is more than 100 times higher than the thermal conductivity of the optical sensor cable 204 with stainless steel arming 206, 208 due to the larger cross sectional area of the heat spreader 144 (>10x) plus the higher thermal conductivity (>10x) of aluminum versus stainless steel.

With d = 0.43mm, Do = 1.236mm and Di = 1mm (Fig. 2) the cross sectional area $A_{SST}$ of the stainless steel arming 206, 208 of the sensor cable 204 is calculated to:

$$A_{SST} = 12 \times \pi \times \frac{d^2}{4} + \pi \times \frac{Do^2}{4} - \pi \times \frac{Di^2}{4} = 2.157mm^2$$

The cross sectional area $A_{Alu}$ of an aluminum heat spreader pipe 144 with Do = 6mm and Di = 2.2mm (Fig. 3) is calculated as:

$$A_{Alu} = \pi \times \frac{Do^2}{4} - \pi \times \frac{Di^2}{4} = 24.473mm^2$$

The thermal conductivity k of stainless steel is between 16.3 and 21.0 W/mK whereas the thermal conductivity of aluminum is around 237.0 W/mK.

The thermal conductance $G_{th}$ per 1m length is calculated as:

$$G_{th} = k \times \frac{A}{1m}$$

$G_{th}$ = 35.16 ... 45.29 µW/K for the stainless steel sensor cable 102

$G_{th}$ = 5.8 mW/K for the aluminum heat spreader 144

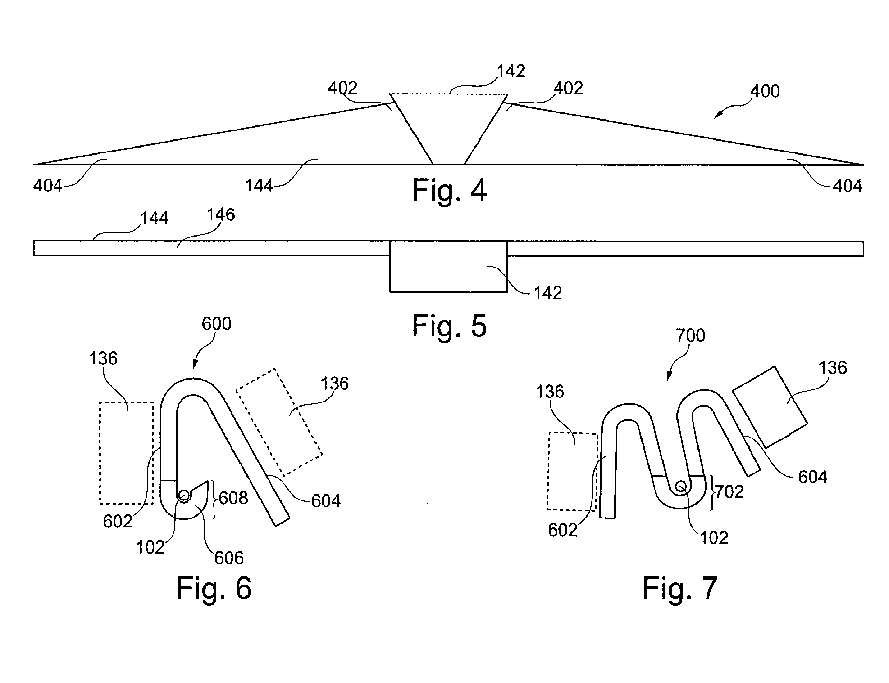

Fig. 4 to Fig. 7 shows embodiments of the invention with direct temperature coupling of the heat source into the center part of the heat spreader and conducting and distributing the heat through the thermally conducting material into the temperature sensing cable over a sufficient length. The sensor cable is attached to the heat spreader by lying in a half pipe (Fig. 6 and Fig. 7).

More specifically, **Fig. 4** shows a device 400 for widening a spatially limited hot spot and also has a thermal coupling element 142 thermally coupled to a widening region 144. The widening region 144 has a narrow end 402 and a wider end 404. The narrow end 402 is connected to the thermal coupling element 142, and the wider end 404 includes the sensor receptacle 146, as shown in **Fig. 5**. Again, the widening region 144 has an inner tubular lumen for receiving a fiber cable 102. As can be taken from Fig. 4, the widening region 144 is conically tapering from the narrow end 402 towards the wider end 404. This ensures a basically homogeneous and symmetric temperature distribution and thermal energy conduction. As shown in Fig. 5, the widening region 144 has a tubular shape at a position where the fiber cable 102 is received in the sensor accommodation 146.

**Fig. 6** shows a cross-sectional view of a device 600 according to another exemplary embodiment of the invention for widening a spatial limited thermal energy peak region. The device 600 is formed by a bent metal plate in a manner that it has a cross-section as shown in Fig. 6. Rollers 136 or other sources or candidates for generating temperature peaks may be attached to planar external surfaces 602, 604 of the device 600. The device 600 has a hook portion 606 formed as a hollow cylindrical segment, wherein the fiber cable 102 may be conveniently placed inside an accommodation space of the hook region 606. A portion 608 extends along an axis perpendicular to the paper plane over a dimension which is significantly larger than a dimension perpendicular to the paper plane of Fig. 6 along which the remainder (particularly plates 602, 604) of the device 600 extends.

**Fig. 7** shows a device 700 for widening a spatially limited thermal energy peak region according to another exemplary embodiment of the invention which is similarly shaped as the embodiment of Fig. 6 but has a basically U-shaped profile 702 as the sensor receptacle. Again, the U-shaped profile 702 may have a longitudinal extension perpendicular to the paper plane of Fig. 7 which is significantly larger than an extension of the remainder of the device 600 which may be formed as a bent metal plate. The embodiment of Fig. 7 has the advantage that both rollers 136 have the same distance to the sensor cable 102 so that the same temperature event at any of the rollers 136 will result in the same signal intensity at the position of the sensor cable 102, due to the symmetric arrangement.

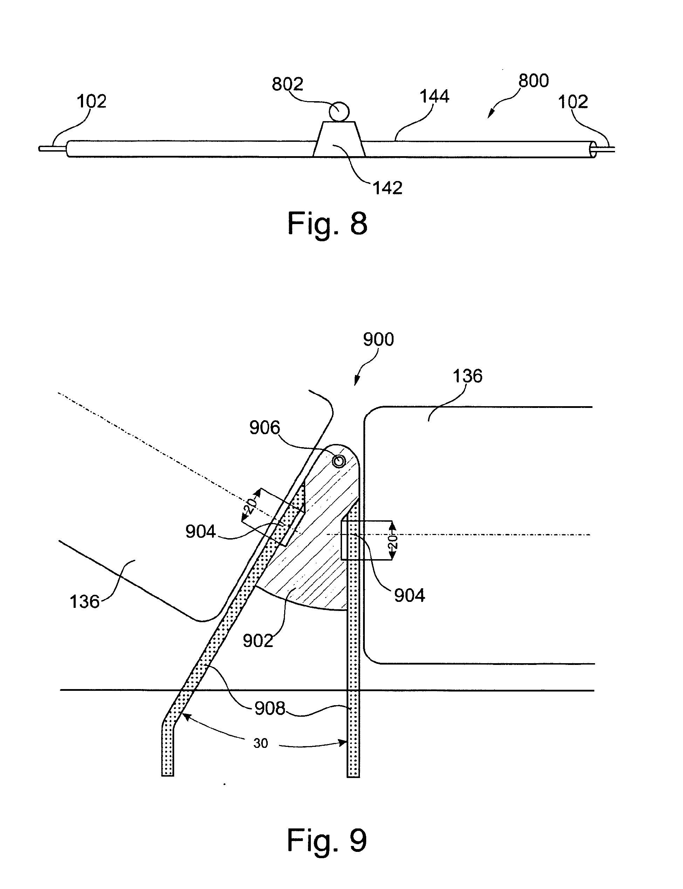

**Fig. 8** shows a device 800 for widening a spatially limited thermal energy peak region or heat source 802 which is thermally coupled to a temperature coupling or thermal coupling element 142 which, in turn, is thermally coupled and mechanically connected to the widening region or heat spreader 144. Fig. 8 shows a general drawing of temperature transformation and distribution from the punctual event to a longer distance along the fiber cable 102 by using a thermal conduction pipe as the widening region or heat spreader 144.

**Fig. 9** shows another embodiment of the invention arranged at rollers 136 of a conveyor belt 132, to detect hot running roller bearings 904 through the axes with a diameter of only 2 centimeters. In this embodiment, the thermal coupling element comprises a wedge-shaped metal block 902 which can be thermally coupled to, in this embodiment, two angularly arranged rollers 136, more particularly to shafts or bearings 904 thereof. By a direct contact, a proper thermal conduction in ensured. At least a part of the widening region is part of the wedge-shaped block 902 and has a lumen 906 as the sensor receptacle. The sensor fiber (with in a tubular structure, not shown) is aligned perpendicular to the paper plane of Fig. 9 and is guided through the lumen 906. Moreover, Fig. 9 shows a support bow 908 adapted for supporting the thermal coupling element and the widening region, i.e. for supporting the wedge-shaped block 902. It is also possible to provide two bows arranged adjacent to one another along a direction perpendicular to the paper plane of Fig. 9, or to provide the support using another structure.

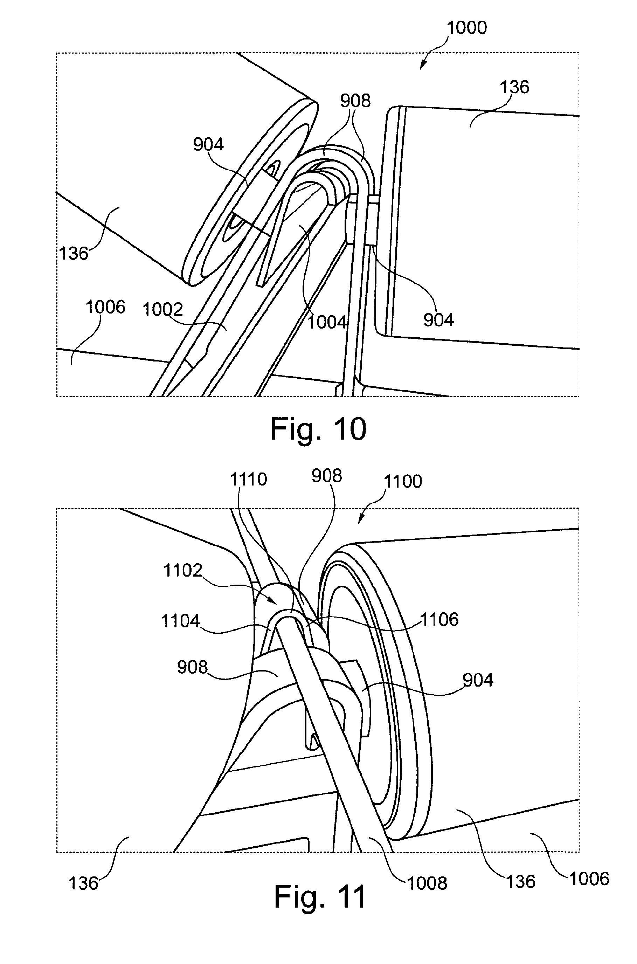

**Fig. 10** shows a device 1000 according to still another exemplary embodiment of the invention. In this embodiment, the thermal coupling element comprises a plate-shaped piece 1002 enclosing an eyelet 1004. Portions of the plate-shaped piece 1002 enclosing the eyelet 1004 are each coupled to a respective roller 136, more precisely a bearing 904 thereof, which can run hot under undesired circumstances. The thermal energy of the bearing 904 is then transferred to the plate-shaped piece 1002 by a direct abutment contact. A tubular body can be aligned and can extend through the eyelet 1004 to form the widening region. This tubular body has a lumen forming the sensor receptacle and receiving a fiber 102 (not shown).

As can further be taken from Fig. 10, a pair of spaced bows 908 are foreseen which are connected to a support structure 1006 such as a metal beam.

**Fig. 11** shows a sensing apparatus 1100 according to an exemplary embodiment of the invention in which the thermal coupling element comprises an angle piece 1102 having a first leg 1104 and a second leg 1106 both of which being formed of a planar sheet region of a bent metal sheet. Each of the sheet-like legs 1104, 1106 is thermally and mechanically coupled to a shaft 904 of a respective roller 136.

In this embodiment, the widening region is formed by a tubular body 1108 which is mounted in a U-shaped section of the angle piece 1102 at which the two legs 1104, 1106 intersect to form a summit 1110. The accommodation space formed by the summit 1110 and the adjacent portions of the legs 1104, 1106 corresponds to an external shape of the tubular body 1108 to thereby provide a proper thermal coupling. In a lumen of the tubular body 1108, a DTS fiber 102 is accommodated (not shown). The tubular body 1108 is placed on the bows 908, 908 with the angle piece 1102 being arranged between the bows 908, 908 and engaging an upper portion of the tubular body 1108.

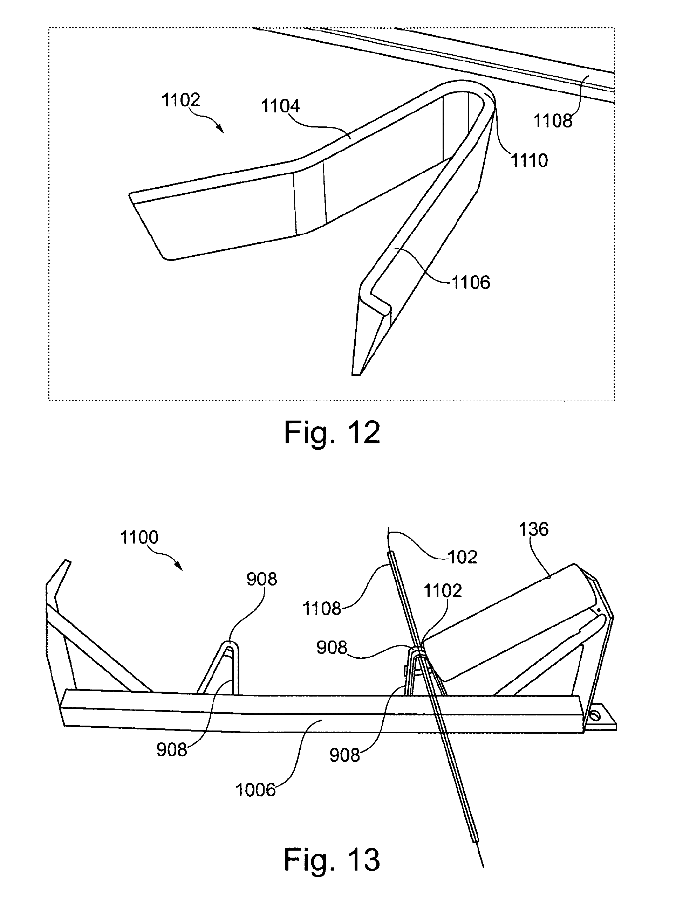

**Fig. 12** is an enlarged view of the angle piece 1102 and the correspondingly formed tubular body 1108.

**Fig. 13** shows a further view of the apparatus 1100.

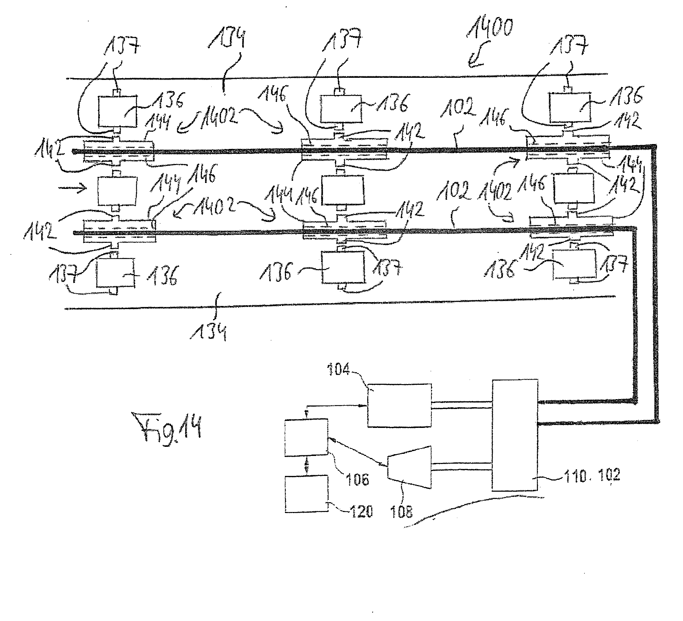

**Fig. 14** shows a sensor apparatus 1400 for localizing one or more spatially limited thermal energy peak regions.

The sensor apparatus 1400 comprises two DTS sensor cables 102 aligned in parallel to one another and also in parallel to a transport direction of a conveyor belt 134. A plurality of devices 1402 for widening a respective spatially limited thermal energy peak region for sensing the spatially limited thermal energy peak region are provided. In the shown embodiment, each of the devices 1402 has two thermal coupling elements 142 and two widening regions 144 forming a twin configuration for coupling a respective one of the sensor cables 102 received in a sensor accommodation 146 to bearings 137 of two rollers 136. Similarly as in Fig. 1, sensor signals of the sensor cables 102 are each forwarded to a processor 106. The processor 106 is adapted for localizing at least one spatially limited thermal energy peak region by evaluating in combination signals sensed by both sensor cables 102. As in conventional DTS, the processor 106 may determine (by a time-of-flight analysis) at which longitudinal position of a respective sensor cable 102 a thermal event occurs. However, the processor 106 may additionally compare sensor signals of different sensor cables 102 at the same longitudinal position.

For instance, a thermal event may be detected at one or more of the bearings 137 of the three rollers 136 at the left hand side of Fig. 14. If only the upper sensor cable 102 and not the lower sensor cable 102 detects a thermal event at the position of the three rollers 136 at the left hand side of Fig. 14, the combined evaluation of the corresponding signals allows the conclusion that the thermal event is present at the uppermost roller 136 of the three rollers 136 at the left hand side of Fig. 14. If only the lower sensor cable 102 and not the upper sensor cable 102 detects a thermal event at the position of the three rollers 136 at the left hand side of Fig. 14, the combined evaluation of the corresponding signals allows the conclusion that the thermal event is present at the lowermost roller 136 of the three rollers 136 at the left hand side of Fig. 14. If both the lower sensor cable 102 and the upper sensor cable 102 detect a strong thermal event at the position of the three rollers 136 at the left hand side of Fig. 14, the combined evaluation of the corresponding signals allows the conclusion that the thermal event is probably present at the middle roller 136 of the three rollers 136 at the left hand side of Fig. 14 (however, although this is highly unlikely, there is a significantly lower probability that two or more of the three rollers 136 at the left hand side of Fig. 14 may experience a thermal event at the same time). Hence, it is possible to identify which of a plurality of rollers has presently the highest probability of failure. The result of this identification may be reported to an user, for instance via a display.

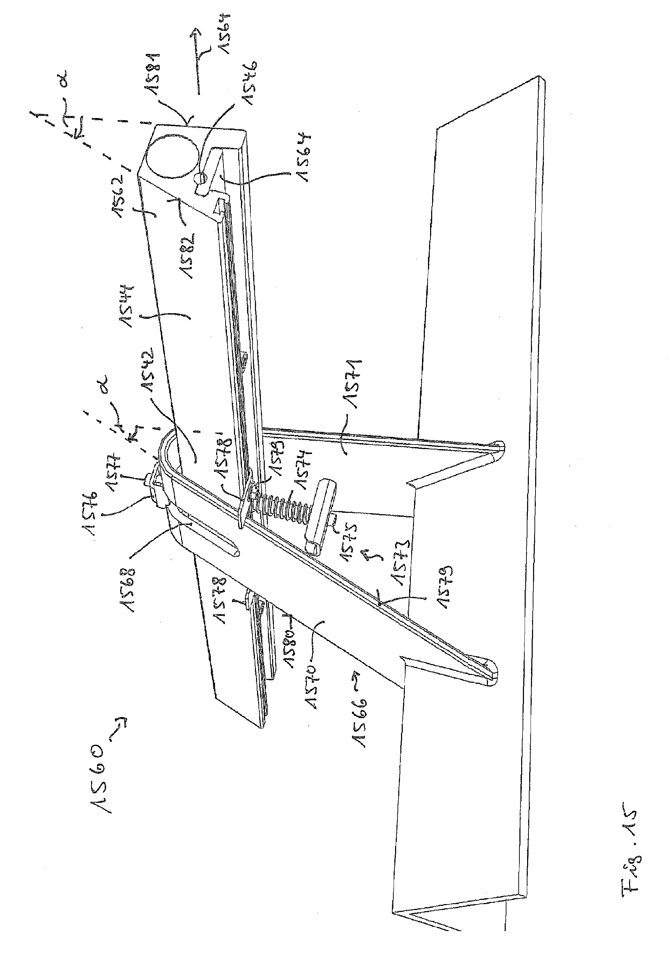

**Fig. 15** illustrates a perspective view of a thermal energy spreading apparatus 1560 according to embodiment of the present invention which may be used to assemble a sensor apparatus for sensing information indicative of a temperature in a spatially limited thermal energy peak region according to an embodiment of the present invention.

The thermal energy spreading apparatus 1560 comprises a cylindrical shaped aluminum structure 1562 which has been manufactured by an extrusion process and which has a cylindrical shape along a longitudinal translation direction 1564. The aluminum structure 1562 comprises a thermal coupling element 1542 and a widening region 1544. The widening region 1544 comprises a receptacle 1546, here formed by a recess or groove along the longitudinal direction 1564 and covered with a metal cover 1564. The metal cover 1564 is secured to the aluminum structure 1562 by a fastening element, such as a bolt or a screw not illustrated in Fig. 15.

In Fig. 15 the thermal energy spreading apparatus 1560 is illustrated as mounted to a holder 1566 having substantially a V-shape which is formed by bending a metal strip having a slit 1568 at a central portion such that a first straight portion 1570 and a second straight portion 1571 include an angle of between 30° and 40°, wherein this angle is indicated as $\alpha$ in Fig. 15.

The slit 1568 is adapted to receive at the side of the first straight portion 1570 an end face of a first axis of a first roller and to receive at the side of the second straight portion 1571 an end face of a second axis of a second roller of a conveyor belt. The end faces (not illustrated in Fig. 15) of these axes of the rollers penetrate protrude through the slit 1568 and come in contact with the thermal coupling element 1542 which is mounted at the holder 1566 using a mounting arrangement 1573.

The mounting arrangement 1573 comprises a spring 1574 and a bolt 1575 having a locking element 1576 arranged at a first end 1577 of the bolt 1575. The bolt 1575 penetrates through a (circular) through-opening formed within the thermal coupling element 1542 perpendicular to the longitudinal direction 1564.

The first end 1577 is locked at the slit 1568 of the holder 1566 at the angled portion thereof by appropriately turning the locking element such that the locking element 1576 can not slide through the slit 1568. When locked using the locking element 1576 the spring 1574 is biased in a compressed state relative to the equilibrium state and applies a force (in the figure 15 upwards directed) to the thermal coupling element 1542, in order to press the thermal coupling element 1542 towards a heat probing structure (here not illustrated end faces of axes of rollers) which penetrates through the slit 1568 of the holder 1566.

For reducing tilting the thermal energy spreading apparatus 1560 relative to the holder 1566 the mounting arrangement 1573 further comprises two clamping elements 1578 which are secured by bolts 1579 to the aluminum structure 1562 at two different positions in order to clamp opposing edges of the holder 1566 at edges 1579 and 1580.

As can be seen from Fig. 15 the aluminum structure representing partly the thermal coupling element 1542 and also partly the widening region 1544 has a trapezoid cross-sectional shape, wherein the non-parallel edges 1581 and 1582 extend along directions including the angle α which is also included by the two straight portions 1570 and 1571 of the holder 1566.

According to other embodiments of the present invention, the thermal energy spreading apparatus 1560 may be adapted for different types of holders which for example comprise straight portions being inclined relative to each other including an angle α different from the angle α illustrated in Fig. 15. In particular, the angle α may assume values between 25° and 45°, for example.

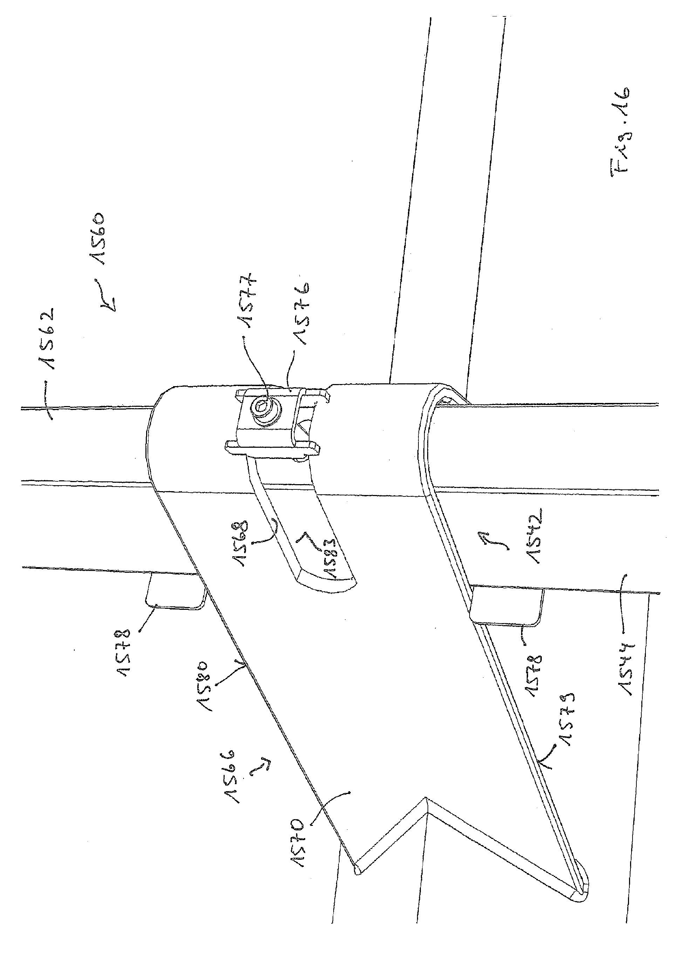

**Fig. 16** illustrates a further perspective view of the thermal energy spreading apparatus 1560 illustrated in Fig. 15 in order to more closely illustrate the portions of the mounting apparatus 1573. In Fig. 16 the locking element 1576 is illustrated in the locked position, wherein the locking element 1576 is turned such that it can not slide through the slit 1568 of the holder 1566.

Further, it is derivable from Fig. 16 that the thermal coupling element 1542 comprises two coupling surfaces (in particular planar surfaces) 1583 from which only one is visible in the illustration of Fig. 16. The coupling surface 1583 will be in physical contact with an end face of an axis of a roller of a conveyor belt, when the thermal energy spreading apparatus 1560 is used for measuring a temperature or a thermal behavior of in particular two rollers of a conveyor belt, wherein two axes of the rollers are received within the slit 1568 of the holder 1566 such that end faces of the axes of the rollers are in thermal contact with the coupling surfaces 1583 of the coupling element 1542. Heat conducted from the axes of the rollers is then spread across the widening region 1544 and may be detected by an optical fiber and an accompanying optical measurement apparatus, wherein the optical fiber is received within the receptacle 1546 illustrated in Fig. 15.

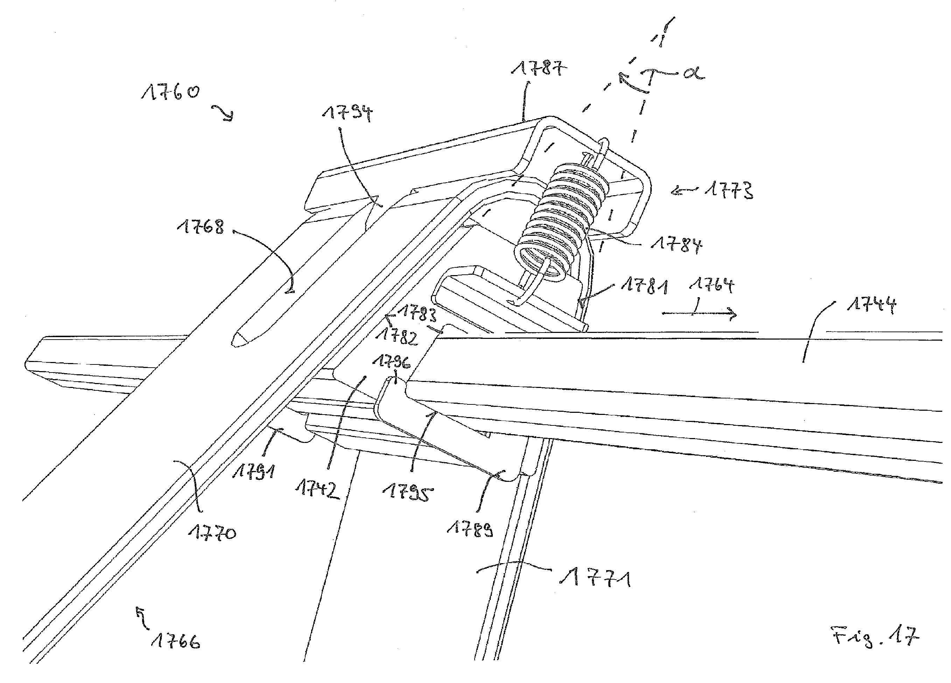

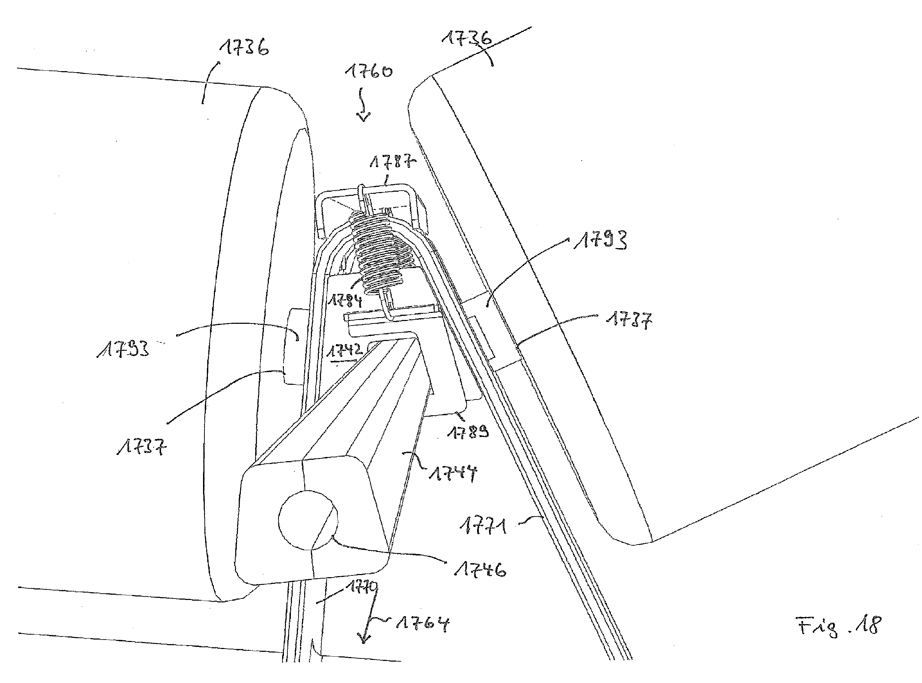

**Figs. 17, 18 and 19** illustrate perspective views of a thermal energy spreading apparatus 1760 according to another embodiment of the present invention, wherein the apparatus 1760 is mounted at a holder 1766 for holding and supporting ends of two axes of a roller of a conveyor belt. (not illustrated in Fig. 17 but visible in Fig. 18).

The thermal energy spreading apparatus 1760 comprises a thermal coupling element 1742 formed by a wedge-shaped block (with trapezoid cross-section) having a cylindrical shape formed by translation of a base area along a longitudinal direction 1764, wherein the base area has a trapezoid shape, wherein non-parallel edges 1781 and 1782 include an angle α which substantially matches an angle enclosed by two straight portions 1770 and 1771 of the holder 1766. Thereby, the thermal coupling element 1742 may fit into the V-shaped holder 1766.

The thermal energy spreading apparatus 1760 further comprises a widening region 1744 which is, as the thermal coupling element 1742, manufactured from aluminum using an extrusion process. As the thermal coupling element 1742 also the widening region 1744 has a cylindrical shape formed by translating a trapezoid base are along the longitudinal axis 1764. The widening region 1744 is received within a recess 1783 formed within the thermal coupling element 1742, wherein the recess 1783 has a shape complementary to the outer shape of the widening region 1744. Thereby, an efficient thermal energy transfer may be ensured.

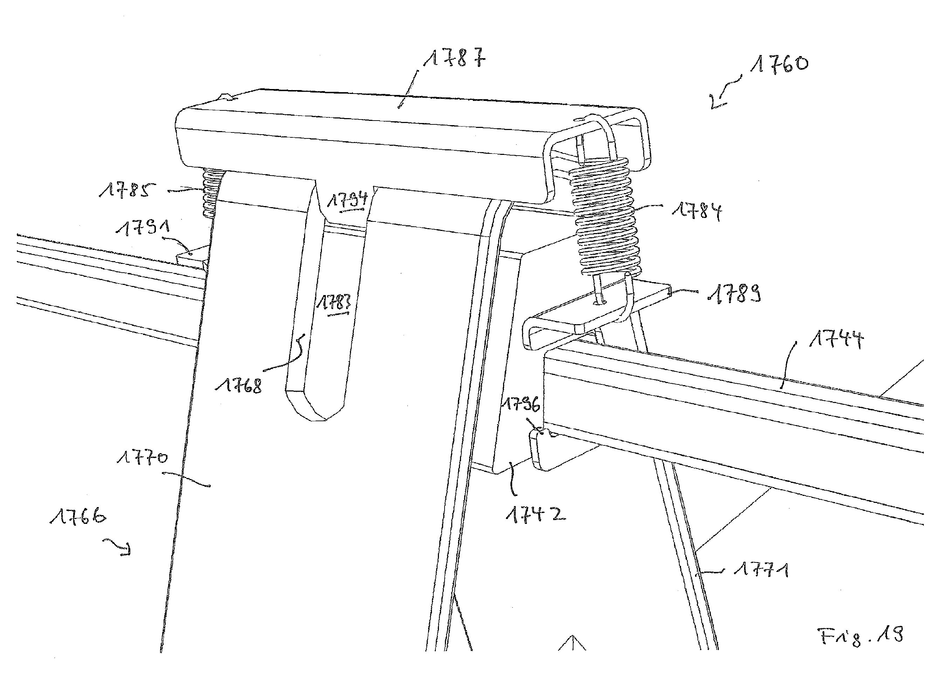

The apparatus 1760 further comprises a mounting arrangement 1773 comprising a first spring 1784, a second spring 1785 (illustrated in Fig. 19), a holder contacting member 1787, a first engaging member 1789 and a second engaging member 1791, wherein the engaging members 1789 and 1791 engage the widening region 1744 at portions where the widening region 1744 protrudes from the recess 1783 in which the widening region 1744 is partially received.

The first spring 1784 is connected to the first engaging member 1789 as well as to a first portion of the holder contacting member 1787, wherein the first spring 1784 is in an extended state (relative to an equilibrium state) when connected to the first engaging member 1789 as well as to the first portion of the holder contacting member 1787 in order to transfer a holding force (upwards in Fig. 17) to the widening region 1744. In turn, the thus held widening portion 1744 transfers the biasing force generated by the first spring 1784 to the thermal coupling element 1742, in order to press the coupling element 1742 into the V-shaped opening provided by the holder 1766 to thus thermally contact the end faces of the axes received within the slit 1768 of the holder 1766 (see **Fig. 18**).

As can be seen for example from **Fig. 19** the second spring 1785, when connected at a first end thereof to a second portion of the holder contacting member 1787 and connected with a second end to the second engaging member 1791, holds and applies a force to the widening region 1744 at an opposing end, in order to achieve a secure releasably mounting of the thermal coupling element 1742 and the widening region 1744 to the holder 1766 and thus to the end faces of the axes of the rollers of the conveyor belt (for example illustrated in Fig. 18).

In particular, in Fig. 18, additionally to the illustration of the thermal energy spreading apparatus 1760, rollers 1736 of a conveyor belt are illustrated, wherein the rollers 1736 are supported by a bearing having axes 1737 and having axes 1793 which have profiled ends such that the axes 1793 may be received within the slit 1768 and may be supported avoiding rotation of the axes.

Fig. 18 also illustrates the receptacle 1746 which is formed by a straight circular through-opening through the widening region 1744 along the longitudinal direction 1764, wherein the through-opening allows to receive an optical fiber of a heat measuring apparatus by optical procedures as is explained above in further detail.

In particular, the engaging members 1789, 1791 as well as the holder contacting member 1787 may be manufactured from metal sheet pieces by stamping, punching and/or bending. In particular, the shape of the metal sheets may be adapted using punching, stamping, embossing, perforating or pressing or the like.

As can be seen from Figs. 17 to 19 the holder contacting member 1787 further comprises protrusions 1794 which may be received within the slit 1768 of the holder 1766, in order to align the longitudinal position of the holder contacting member 1787 and to avoid displacement of the holder contacting member 1787 in the longitudinal direction 1764. Further, the engaging members 1789, 1791 comprise a straight support area 1795 for supporting the lower surface of the widening region 1744.

In order to avoid that the widening region 1744 slips away from the support area 1795 the engaging members 1789, 1791 further comprise protruding noses or bumps 1796 at an end of the support area 1795. In projection along the longitudinal direction 1764 the engaging members 1789, 1791 have substantially a U-shape.

It should be noted that the term "comprising:" does not exclude other elements or features and the "a" or "an" does not exclude a plurality. Also elements described in association with different embodiments may be combined.

It should also be noted that reference signs in the claims shall not be construed as limiting the scope of the claims.

## Claims

1. A device (140) for widening a spatially limited thermal energy peak region for sensing the spatially limited thermal energy peak region, the device comprising:

    a thermal coupling element (142) adapted to be thermally coupled to the spatially limited thermal energy peak region; and the device being **characterised by**
    a widening region (144) thermally coupled to the thermal coupling element so that thermal energy conducted from the spatially limited thermal energy peak region to the thermal coupling element is spatially widened at the widening region;
    wherein the widening region comprises a sensor receptacle (146) adapted for receiving a sensor along at least a part of an extension of the widening region in such a manner that the sensor, when being received in the sensor receptacle, is thermally coupled to the widening region,
    wherein the sensor is adapted for Distributed Temperature Sensing.

2. The device according to claim 1, wherein the widening region has a narrow end portion and a wider end portion, the narrow end portion being connected to the thermal coupling element and the wider end portion includes the sensor receptacle.

3. The device according to claim 1,
    wherein the thermal coupling element comprises an angle piece having two angled legs each of which being couplable to a member representing a respective spatially limited thermal energy peak region;
    wherein the widening region comprises a tubular body arranged at a summit of the angle piece and having a lumen forming the sensor receptacle and laterally extending beyond the thermal coupling element.

4. The device according to claim 1,
    wherein the thermal coupling element comprises a wedge-shaped block, in particular having coupling surfaces including an angle between 25° and 45°, being couplable to one or two members representing a respective spatially limited thermal energy peak region;
    wherein at least a part of the widening region is part of the wedge-shaped block having a lumen forming the sensor receptacle.

5. The device according to claim 1,
    wherein the thermal coupling element comprises a plate-shaped piece having an eyelet or a recess, wherein portions of the plate-shaped piece enclosing the eyelet or the recess are each couplable to a member representing a respective spatially limited thermal energy peak region;
    wherein the widening region comprises a tubular body extending through the eyelet or the recess and having a lumen forming the sensor receptacle.

6. A thermal energy spreading apparatus, comprising:

a device according to any of claims 1 to 5;
a mounting arrangement adapted to releasably mount the device at a holder for positioning the device such that the spatially limited thermal energy peak region is at least partially in physical contact with the thermal coupling element.

7. The apparatus according to claim 6, wherein the mounting arrangement comprises a spring mechanism adapted to apply a biasing spring force between the thermal coupling element and the spatially limited thermal energy peak region and/or between the widening region and the spatially limited thermal energy peak region and/or between the sensor receptacle and the sensor to thereby promote a thermal coupling.

8. The apparatus according to claim 7,
wherein a through opening is formed in the thermal coupling element and/or in the widening region,
wherein the spring mechanism comprises:

a spring and
a bolt having a locking element arranged at a first end of the bolt,

wherein the bolt is adapted to penetrate through the through opening,
wherein the locking element is releasably lockable at the holder at a first holder portion and a second end of the bolt is adapted to hold the spring in a biased state between the second end of the bolt and a surface of the thermal coupling element and/or the widening region surrounding the through opening for applying the biasing spring force.

9. The apparatus according to claim 7, wherein the spring mechanism comprises:

a first spring,
a second spring,
a holder contacting member to be in contact with and to be supported by the holder,
a first engaging member for releasably engaging the thermal coupling element and/or the widening region at a first portion, and
a second engaging member for releasably engaging the thermal coupling element and/or the widening region at a second portion,
wherein the first spring applies the biasing spring force between the first engaging member and a first portion of the holder contacting member,
wherein the second spring applies the biasing spring force between the second engaging member and a second portion of the holder contacting member.

10. The apparatus according to any one of claims 6 to 9, wherein the thermal coupling element comprises a planar thermal coupling surface which is arranged to contact a planar exposed surface of an external member, the planar exposed surface comprising the limited thermal energy peak region, wherein in particular the external member comprises an axis of a roller of a conveyor belt system.

11. The apparatus according to the preceding claim, wherein the thermal coupling element comprises another planar thermal coupling surface which is arranged to contact another planar exposed surface of another external member, the other planar exposed surface comprising another limited thermal energy peak region, wherein in particular the other external member comprises another axis of another roller of the conveyor belt system, wherein the planar thermal coupling surface and the other planar thermal coupling surface are in particular opposite to each other including an angle between 25° and 45°, in particular between 30° and 40°.

12. A sensor apparatus for sensing information indicative of a temperature in a spatially limited thermal energy peak region, the sensor apparatus comprising:

a device according to any of claims 1 to 5 or an apparatus according to one of claims 6 to 11;
a sensor received in the sensor receptacle.

13. The sensor apparatus according to claim 12, further comprising a fiber, wherein a part of the fiber is received in the sensor receptacle, in particular in a straight manner.

14. The sensor apparatus according to any of claims 12 to 13, further comprising:

at least one further device according to any of claims 1 to 6 or at least one further apparatus according to any of claims 12 to 13;
at least one further sensor received in the sensor receptacle of the at least one further device or the at least one further apparatus; and
a processor adapted for localizing at least one spatially limited thermal energy peak region by evaluating a combination of signals sensed by the sensors.

15. A method of widening a spatially limited thermal energy peak region for sensing the spatially limited thermal energy peak region, the method comprising:

thermally coupling a thermal coupling element (142) to the spatially limited thermal energy peak region; and the method being **characterised by**
thermally coupling a widening region (144) to the thermal coupling element so that thermal energy conducted from the spatially limited thermal energy peak region to the thermal coupling element is spatially widened at the widening region;
receiving a sensor in a sensor receptacle (146) of the widening region along at least a part of an extension of the widening region in such a manner that the sensor is thermally coupled to the widening region,
wherein the sensor is adapted for Distributed Temperature Sensing.

## Patentansprüche

1. Eine Vorrichtung (140) zum Ausweiten eines räumlich begrenzten Thermal Energie Höchstwert Bereiches zum Messen des räumlich begrenzten Thermal Energie Höchstwert Bereiches, die Vorrichtung aufweisend:

ein Thermal Koppel Element (142), eingerichtet, um thermisch an den räumlich begrenzten Thermal Energie Höchstwert Bereich gekoppelt zu sein;
und die Vorrichtung ist

**dadurch gekennzeichnet, dass**

ein Ausweit Bereich (144) thermisch an das Thermal Koppel Element gekoppelt ist, so dass thermische Energie, welche von dem räumlich begrenzten Thermal Energie Höchstwert Bereich zu dem Thermal Koppel Element geleitet ist, an dem Ausweit Bereich räumlich ausgeweitet ist;
wobei der Ausweit Bereich aufweist einen Sensor Behälter (146), welcher eingerichtet ist zum Aufnehmen eines Sensors entlang von zumindest einem Teil von einer Erstreckung von dem Ausweit Bereich in solch einer Weise, dass der Sensor, wenn er in dem Sensor Behälter aufgenommen ist, thermisch an den Ausweit Bereich gekoppelt ist,
wobei der Sensor eingerichtet ist für ein verteiltes Temperatur Messen.

2. Die Vorrichtung gemäß Anspruch 1, wobei der Ausweit Bereich ein enges Endteil und ein breiteres Endteil hat, wobei das enge Endteil an das Thermal Koppel Element verbunden ist und das breitere Endteil den Sensor Behälter beinhaltet.

3. Die Vorrichtung gemäß Anspruch 1,
wobei das Thermal Koppel Element ein Winkelstück aufweist, welches zwei gewinkelte Schenkel hat, von denen jeder an ein Bauteil koppelbar ist, welches einen jeweiligen räumlich begrenzten Thermal Energie Höchstwert Bereich repräsentiert;
wobei der Ausweit Bereich einen Hohlkörper aufweist, welcher an einem Scheitelpunkt von dem Winkelstück angeordnet ist, und welcher ein Lumen hat, welches den Sensor Behälter bildet und sich seitlich über das Thermal Koppel Element hinaus erstreckt.

4. Die Vorrichtung gemäß Anspruch 1,

wobei das Thermal Koppel Element einen Keil-förmigen Block aufweist, welcher insbesondere Koppel Oberflächen hat, welche einen Winkel zwischen 25° und 45° beinhalten, koppelbar an ein oder zwei Bauteile, welche einen jeweiligen räumlich begrenzten Thermal Energie Höchstwert Bereich repräsentieren;
wobei zumindest ein Anteil von dem Ausweit Bereich ein Anteil von dem Keil-förmigen Block ist, welcher ein Lumen hat, welches den Sensor Behälter bildet.

5. Die Vorrichtung gemäß Anspruch 1,
wobei das Thermal Koppel Element ein Platten-förmiges Stück aufweist, welches eine Öse oder eine Vertiefung hat, wobei jedes der Teile von dem Platten-förmigen Stück, welche die Öse oder die Vertiefung umgeben, mit einem Bauteil koppelbar sind, welches einen jeweiligen räumlich begrenzten Thermal Energie Höchstwert Bereich repräsentiert,
wobei de Ausweit Bereich einen Hohlkörper aufweist, welcher sich durch die Öse oder die Vertiefung erstreckt und ein Lumen hat, welches den Sensor Behälter bildet.

6. Ein Thermal Energie ausbreitendes Gerät aufweisend:

eine Vorrichtung gemäß einem beliebigen von den Ansprüchen 1 bis 5;
eine Montier Anordnung, welche eingerichtet ist die Vorrichtung an einem Halter lösbar zu montieren, um die Vorrichtung zu positionieren, so dass der räumlich begrenzte Thermal Energie Höchstwert Bereich zumindest teilweise in physikalischem Kontakt mit dem Thermal Koppel Element ist.

7. Das Gerät gemäß Anspruch 6, wobei die Montier Anordnung aufweist einen Feder Mechanismus, welcher eingerichtet ist eine vorgespannte Federkraft zwischen dem Thermal Koppel Element und dem räumlich begrenzten Thermal Energie Höchstwert Bereich und/oder zwischen dem Ausweit Bereich und dem räumlich begrenzten Thermal Energie Höchstwert Bereich und/oder zwischen dem Sensor Behälter und dem Sensor anzuwenden, um dabei eine Thermal Kopplung zu fördern.

8. Das Gerät gemäß Anspruch 7,
wobei eine durchgehende Öffnung in dem Thermal Koppel Element und/oder in dem Ausweit Bereich gebildet ist,
wobei der Feder Mechanismus aufweist
eine Feder und
einen Bolzen, welcher ein Verschliesselement hat, welches an einem ersten Ende von dem Bolzen angeordnet ist, wobei der Bolzen eingerichtet ist, um die durchgehende Öffnung zu durchdringen, wobei das Verschliesselement an dem Halter an einem ersten Halter Teil lösbar verschließbar ist und
ein zweites Ende von dem Bolzen eingerichtet ist, um die Feder in einem vorgespannten Status zwischen dem zweiten Ende von dem Bolzen und einer Oberfläche von dem Thermal Koppel Element und/oder dem Ausweit Bereich zu halten, welcher die durchgehende Öffnung umgibt, um die vorgespannte Federkraft anzuwenden.

9. Das Gerät gemäß Anspruch 7, wobei der Feder Mechanismus aufweist:

eine erste Feder,
eine zweite Feder,
ein Halter-kontaktierendes Bauteil, um in Kontakt mit dem Halter zu sein und, um mittels des Halters gestützt zu sein,
ein erstes Eingreif Bauteil zum lösbaren Eingreifen des Thermal Koppel Elements und/oder des Ausweit Bereichs an einem ersten Teil, und
ein zweites Eingreif Bauteil zum lösbaren Eingreifen des Thermal Koppel Elements und/oder des Ausweit Bereichs an einem zweiten Teil,
wobei die erste Feder die vorgespannte Federkraft zwischen dem ersten Eingreif Bauteil und einem ersten Teil von dem Halter-kontaktierenden Bauteil anwendet,
wobei die zweite Feder die vorgespannte Federkraft zwischen dem zweiten Eingreif Bauteil und einem zweiten Teil von dem Halter-kontaktierenden Bauteil anwendet.

10. Das Gerät gemäß einem beliebigen von den Ansprüchen 6 bis 9, wobei das Thermal Koppel Element eine planare Thermal Koppel Oberfläche aufweist, welche angeordnet ist, um eine planare freilgelegte Oberfläche von einem externen Bauteil zu kontaktieren, wobei die planare freigelegte Oberfläche den begrenzten Thermal Energie Höchstwert Bereich aufweist, wobei insbesondere das externe Bauteil eine Achse von einer Laufrolle von einem Fließbandsystem aufweist.

11. Das Gerät gemäß dem vorhergehenden Anspruch, wobei das Thermal Koppel Element eine andere planare Thermal Koppel Oberfläche aufweist, welche angeordnet ist, um eine andere planare freigelegte Oberfläche von einem anderen externen Bauteil zu kontaktieren,
wobei die andere planare freigelegte Oberfläche einen anderen begrenzten Thermal Energie Höchstwert Bereich aufweist,
wobei insbesondere das andere externe Bauteil eine andere Achse von einer anderen Laufrolle von dem Fließbandsystem aufweist,
wobei die planare Thermal Koppel Oberfläche und die andere planare Thermal Koppel Oberfläche insbesondere gegenüber zueinander sind, wobei sie einen Winkel zwischen 25° und 45° einschließen, insbesondere zwischen 30° und 40°.

12. Ein Sensor Gerät zum Messen von Informationen, welche indikativ für eine Temperatur in einem räumlich begrenzten Thermal Energie Höchstwert Bereich ist, wobei die Sensor Gerät aufweist:

    eine Vorrichtung gemäß einem beliebigen von den Ansprüchen 1 bis 5 oder einem Gerät gemäß einem beliebigen von den Ansprüchen 6 bis 11;
    einen Sensor, welcher in dem Sensor Behälter aufgenommen ist.

13. Das Sensor Gerät gemäß Anspruch 12, ferner aufweisend eine Faser, wobei ein Anteil von der Faser in dem Sensor Behälter aufgenommen ist, insbesondere in einer geradlinigen Weise.

14. Das Sensor Gerät gemäß einem beliebigen von den Ansprüchen 12 bis 13, ferner aufweisend:

    zumindest eine weitere Vorrichtung gemäß einem beliebigen von den Ansprüchen 1 bis 6 oder zumindest ein weiteres Gerät gemäß einem beliebigen von den Ansprüchen 12 bis 13;
    zumindest einen weiteren Sensor, welcher in dem Sensor Behälter von der zumindest einen weiteren Vorrichtung oder dem zumindest einen weiteren Gerät aufgenommen ist; und
    einen Prozessor, welcher eingerichtet ist zum Lokalisieren zumindest eines räumlich begrenzten Thermal Energie Höchstwert Bereichs mittels Evaluierens einer Kombination von Signalen, welche mittels der Sensoren gemessen sind.

15. Ein Verfahren zum Ausweiten eines räumlich begrenzten Thermal Energie Höchstwert Bereichs zum Messen des räumlichen begrenzten Thermal Energie Höchstwert Bereichs, das Verfahren aufweisend:

    thermisches Koppeln eines Thermal Koppel Elements (142) an den räumlich begrenzten Thermal Energie Höchstwert Bereich;
    und das Verfahren ist
    **dadurch gekennzeichnet, dass**
    thermisches Koppeln eines Ausweit Bereichs (144) an das Thermal Koppel Element, so dass Thermal Energie, welche von dem räumlich begrenzten Thermal Energie Höchstwert Bereich zu dem Thermal Koppel Element geleitet wird, an dem Ausweit Bereich räumlich ausgeweitet wird;
    Aufnehmen eines Sensors in einem Sensor Behälter (146) von dem Ausweit Bereich entlang zumindest eines Anteils von einer Erstreckung von dem Ausweit Bereich auf solch eine Weise, dass der Sensor thermisch an den Ausweit Bereich gekoppelt ist,
    wobei der Sensor eingerichtet ist für ein verteiltes Temperatur Messen.

**Revendications**

1. Dispositif (140) pour élargir une région de pointe d'énergie thermique spatialement limitée pour détecter la région de pointe d'énergie thermique spatialement limitée, le dispositif comprenant :

    un élément de couplage thermique (142) adapté pour être couplé thermiquement à la région de pointe d'énergie thermique spatialement limitée ; et le dispositif étant **caractérisé par**
    une région d'élargissement (144) couplée thermiquement à l'élément de couplage thermique de manière que l'énergie thermique conduite de la région de pointe d'énergie thermique spatialement limitée à l'élément de couplage thermique soit élargie spatialement au niveau de la région d'élargissement ;
    dans lequel la région d'élargissement comprend un logement de capteur (146) adapté pour recevoir un capteur le long d'au moins une partie d'une extension de la région d'élargissement de telle manière que le capteur, quand il est reçu dans le logement de capteur, soit couplé thermiquement à la région d'élargissement, dans lequel le capteur est adapté pour la détection de température distribuée.

2. Dispositif selon la revendication 1, dans lequel la région d'élargissement comporte une portion d'extrémité étroite et une portion d'extrémité plus large, la portion d'extrémité étroite étant connectée à l'élément de couplage thermique et la portion d'extrémité plus large comprend le logement de capteur.

3. Dispositif selon la revendication 1,
dans lequel l'élément de couplage thermique comprend une pièce d'angle ayant deux branches formant un angle, chacune desquelles pouvant être couplée à un élément représentant une région de pointe d'énergie thermique spatialement limitée respective ;
dans lequel la région d'élargissement comprend un corps tubulaire disposé à un sommet de la pièce d'angle et ayant une lumière formant le logement de capteur et s'étendant latéralement au-delà de l'élément de couplage thermique.

4. Dispositif selon la revendication 1,
dans lequel l'élément de couplage thermique comprend un bloc en forme de coin, en particulier ayant des surfaces de couplage formant un angle entre 25° et 45°, pouvant être couplé à un ou deux éléments représentant une région de pointe d'énergie thermique spatialement limitée respective ;
dans lequel au moins une partie de la région d'élargissement fait partie du bloc en forme de coin ayant une lumière formant le logement de capteur.

5. Dispositif selon la revendication 1,
dans lequel l'élément de couplage thermique comprend une pièce en forme de plaque ayant un oeillet ou un évidement, dans lequel des portions de la pièce en forme de plaque renfermant l'oeillet ou l'évidement peuvent être couplées chacune à un élément représentant une région de pointe d'énergie thermique spatialement limitée respective ;
dans lequel la région d'élargissement comprend un corps tubulaire s'étendant à travers l'oeillet ou l'évidement et ayant une lumière formant le logement de capteur.

6. Appareil d'étalement d'énergie thermique, comprenant :

un dispositif selon l'une quelconque des revendications 1 à 5 ;
un agencement de montage adapté pour monter de manière amovible le dispositif au niveau d'un support pour positionner le dispositif de manière que la région de pointe d'énergie thermique spatialement limitée soit au moins partiellement en contact physique avec l'élément de couplage thermique.

7. Appareil selon la revendication 6, dans lequel l'agencement de montage comprend un mécanisme à ressort adapté pour appliquer une force élastique de sollicitation entre l'élément de couplage thermique et la région de pointe d'énergie thermique spatialement limitée et/ou entre la région d'élargissement et la région de pointe d'énergie thermique spatialement limitée et/ou entre le logement de capteur et le capteur pour favoriser ainsi un couplage thermique.

8. Appareil selon la revendication 7,
dans lequel une ouverture passante est formée dans l'élément de couplage thermique et/ou dans la région d'élargissement,
dans lequel le mécanisme à ressort comprend :

un ressort et
un boulon ayant un élément de verrouillage agencé à une première extrémité du boulon,
dans lequel le boulon est adapté pour pénétrer à travers l'ouverture passante,
dans lequel l'élément de verrouillage peut être verrouillé de manière amovible au niveau d'un support au niveau d'une première portion de support et une deuxième extrémité du boulon est adaptée pour maintenir le ressort dans un état de contrainte entre la deuxième extrémité du boulon et une surface de l'élément de couplage thermique et/ou la région d'élargissement entourant l'ouverture passante pour appliquer la force élastique de sollicitation.

**9.** Appareil selon la revendication 7, dans lequel le mécanisme à ressort comprend :

un premier ressort,
un deuxième ressort,
un élément de contact de support destiné à être en contact avec le support et supporté par celui-ci,
un premier élément de mise en prise pour mettre en prise de manière amovible l'élément de couplage thermique et/ou la région d'élargissement au niveau d'une première portion, et
un deuxième élément de mise en prise pour mettre en prise de manière amovible l'élément de couplage thermique et/ou la région d'élargissement au niveau d'une deuxième portion,
dans lequel le premier ressort applique la force élastique de sollicitation entre le premier élément de mise en prise et une première portion de l'élément de contact de support,
dans lequel le deuxième ressort applique la force élastique de sollicitation entre le deuxième élément de mise en prise et une deuxième portion de l'élément de contact de support.

**10.** Appareil selon l'une quelconque des revendications 6 à 9, dans lequel l'élément de couplage thermique comprend une surface de couplage thermique plane qui est agencée pour être en contact avec une surface exposée plane d'un élément externe, la surface exposée plane comprenant la région de pointe d'énergie thermique limitée, dans lequel l'élément externe comprend en particulier un axe d'un rouleau d'un système de bande transporteuse.

**11.** Appareil selon la revendication précédente, dans lequel l'élément de couplage thermique comprend une autre surface de couplage thermique plane qui est agencée pour être en contact avec une autre surface exposée plane d'un autre élément externe, l'autre surface exposée plane comprenant une autre région de pointe d'énergie thermique limitée, dans lequel l'autre élément externe comprend en particulier un autre axe d'un autre rouleau du système de bande transporteuse, dans lequel la surface de couplage thermique plane et l'autre surface de couplage thermique plane sont en particulier opposées l'une à l'autre en formant un angle entre 25° et 45°, en particulier entre 30° et 40°.

**12.** Appareil de détection pour détecter des informations indicatives d'une température dans une région de pointe d'énergie thermique spatialement limitée, l'appareil de détection comprenant :

un dispositif selon l'une quelconque des revendications 1 à 5 ou un appareil selon une des revendications 6 à 11 ;
un capteur reçu dans le logement de capteur.

**13.** Appareil de détection selon la revendication 12, comprenant en outre une fibre, dans lequel une partie de la fibre est reçue dans le logement de capteur, en particulier de manière rectiligne.

**14.** Appareil de détection selon l'une quelconque des revendications 12 à 13, comprenant en outre :

au moins un autre dispositif selon l'une quelconque des revendications 1 à 6 ou au moins un autre appareil selon l'une quelconque des revendications 12 à 13 ;
au moins un autre capteur reçu dans le logement de capteur de l'au moins un autre dispositif ou de l'au moins un autre appareil ; et
un processeur adapté pour localiser au moins une région de pointe d'énergie thermique spatialement limitée en évaluant une combinaison de signaux détectés par les capteurs.

**15.** Procédé d'élargissement d'une région de pointe d'énergie thermique spatialement limitée pour détecter la région de pointe d'énergie thermique spatialement limitée, le procédé comprenant :

le couplage thermique d'un élément de couplage thermique (142) à la région de pointe d'énergie thermique spatialement limitée ; et le procédé étant **caractérisé par**
le couplage thermique d'une région d'élargissement (144) à l'élément de couplage thermique de manière que l'énergie thermique conduite de la région de pointe d'énergie thermique spatialement limitée à l'élément de couplage thermique soit élargie spatialement au niveau de la région d'élargissement ;
la réception d'un capteur dans un logement de capteur (146) de la région d'élargissement le long d'au moins une partie d'une extension de la région d'élargissement de manière que le capteur soit couplé thermiquement à la région d'élargissement,
dans lequel le capteur est adapté pour la détection de température distribuée.

Fig. 1

Fig. 2

Fig. 3

Fig. 4

Fig. 5

Fig. 6

Fig. 7

EP 2 612 119 B1

Fig. 8

Fig. 9

Fig. 10

Fig. 11

1102    1104

1108

1110

1106

Fig. 12

1100

908

136

102

1108

1102

908

908

908

1006

Fig. 13

Fig.14

Fig. 15

EP 2 612 119 B1

1562

1560

1578

1580

1566

1568

1577

1570

1576

1583

1578

1542

1579

1544

Fig. 16

Fig. 17

Fig. 18

Fig. 84

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6079875 A

**Non-patent literature cited in the description**

- **S. GROßWIG ; B. VOGEL ; C. KÜMPEL ; C. POHL.** Early detection of smoldering fire in close proximity of conveyer belt systems. *Glückauf,* 2008, vol. 144 (1/2